# EUROPEAN PATENT SPECIFICATION

(11) **EP 1 244 325 B1**
(45) Date of publication and mention of the grant of the patent: **10.05.2006**
(21) Application number: 02252079.5
(22) Date of filing: 22.03.2002
(51) Int. Cl.: H04Q 7/38

(54) **Radio apparatus and handover control method for radio apparatus**
Funkgerät und Weiterreichungssteuerungsverfahren für das Funkgerät
Appareil radio et procédé de gestion du transfert d'appel pour appareil radio

(30) Priority: 23.03.2001 JP 2001086272
(43) Date of publication of application: 25.09.2002
(73) Proprietor: KABUSHIKI KAISHA TOSHIBA, Tokyo 105-8001 (JP)
(72) Inventor: Inoue, Kaoru, c/o Intellectual Property Division, Minato-ku, Tokyo 105-8001 (JP); Takeda, Daisuke, c/o Intellectual Property Div., Minato-ku, Tokyo 105-8001 (JP); Tomizawa, Takeshi, c/o Intellectual Property Div., Minato-ku, Tokyo 105-8001 (JP); Mukai, Manabu, c/o Intellectual Property Div., Minato-ku, Tokyo 105-8001 (JP); Mitsugi, Jun, c/o Intellectual Property Div., Minato-ku, Tokyo 105-8001 (JP); Wakutsu, Takashi, c/o Intellectual Property Div., Minato-ku, Tokyo 105-8001 (JP); Kubo, Shun-ichi, c/o Intellectual Property Div., Minato-ku, Tokyo 105-8001 (JP)
(74) Representative: Midgley, Jonathan Lee

(56) References cited:
- DE-A- 19 818 515
- US-A- 5 943 333
- US-A- 6 052 600
- WIERLER A ET AL: "SOFTWARE RADIO STRUCTURE FOR UMTS AND SECOND GENERATION MOBILE COMMUNICATION SYSTEMS" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, vol. 2 CONF. 50, September 1999 (1999-09), pages 939-942, XP000924648 ISBN: 0-7803-5436-2
- JONDRAL F ET AL: "A software defined radio structure for 2nd an 3rd generation mobile communications standards" IEEE 6TH INT. SYMP. ON SPREAD-SPECTRUM TECH. & APPLI., vol. 2, 6 September 2000 (2000-09-06), pages 637-640, XP010516656

## Description

The present invention relates to a radio apparatus which can conform to different types of communication schemes and perform communication through radio channels available at different times, and a handover control method for the radio apparatus.

A conventional radio terminal such as a portable telephone and PHS (Personal Handyphone System) telephone has been specifically designed for a specific modulation scheme defined by some standards and commercialized. One radio terminal could not therefore cope with different modulation schemes.

For portable telephones and PHSs, a form called a cellular system is used, in which base stations are distributed, and each base station provides a predetermined area as a service area and communicates with a radio terminal to connect it to a communication network such as a telephone network. In such a cellular system, when a radio terminal has moved from the service area of a given base station to an adjacent service area, handover (handoff) is performed to prevent disconnection of communication.

According to this technique, when the radio terminal moves to the service area of a base station BS2 during communication with a base station BS1, the radio terminal starts communicating with the base station BS2 and disconnects communication with the base station BS1. With this technique, the radio terminal can continue communication even if the service area changes. In this case, the base stations BS1 and BS2 use the same communication scheme (e.g., the PHS system). As described above, as long as the radio terminal moves between base stations using the same communication scheme, handoff can be performed while the moving radio terminal is moving and performing communication. This makes it possible to perform communication on the move.

If the base stations BS1 and BS2 use different communication schemes (e.g., the base station BS1 uses the PHS system and the base station BS2 uses the PDC) Personal Digital Cell (the standard digital portable telephone scheme in Japan, and standards common to carriers for portable telephone services), the radio terminal during movement cannot continue communication in a destination service area because of mismatch with the communication scheme. Therefore, handoff cannot be performed during communication.

With the recent explosive popularity of mobile communication systems, users have been using this system in various ways, e.g., transmitting mail and data, facsimile, and Web browsing. In consideration of communication speed and call charge, an increasing number of users use PHSs for the Internet and data communication and portable telephones for speech communication. With such diversification of use, demands have arisen for a so-called multimode terminal which allows the user to use both a portable telephone and a PHS with one radio terminal.

In response to this demand, a dual-mode terminal which allows the user to use both a portable telephone and a PHS with one terminal has been commercialized. This terminal is simply designed to incorporate two radio apparatuses in one casing in a hardware form. For this reason, this terminal cannot newly comply with another system or upgrading of any built-in function cannot be done.

As a technique of solving such a drawback, a software defined radio (SDR) has been proposed. This software defined radio is designed to implement some functions of a radio unit by using a digital signal processor (DSP) and the like, and can change radio schemes such as modulation schemes by interchanging software programs without any change in hardware.

This software defined radio is designed to cope with radio communication based on various radio communication schemes by interchanging software programs. Under the present circumstances, however, when the radio unit moves between service areas based on different communication schemes during communication, a communication failure occurs.

In a cellular system, when a radio terminal moves from the service area of a given base station to the service area of an adjacent base station, handover (handoff) is performed to prevent disconnection of communication. This operation is effective only for movement between service areas based on the same communication scheme.

Assume that a user is performing data communication by using a PHS while moving because of advantages in using the PHS in terms of communication speed and charge. However, the service area of a base station for PHSs is narrower than that for portable telephones, and the service network covered by a base station for PHSs is not wider than that for portable telephones.

If, therefore, the user is performing communication by using the PHS while moving in a region where service areas are distributed relatively sparsely, e.g., an outskirt of an urban area or a suburban area, he/she tends to go out of the service areas for PHSs. Even in this case, since the user is located within the service area of a base station for portable telephone with high possibility, no problem arises if he/she can continue communication in the service area where he/she has moved.

The existing software defined radio, however, is based on the scheme of loading a necessary software program at the start of use, controlling the DSP with the software program, and performing communication. If, therefore, the user moves to a service area based on a communication scheme that is incompatible with the currently used communication scheme during communication, handover cannot be performed, and the communication is disconnected.

That is, when the user moves out of the service area for PHSs during communication using the PHS, the communication is disconnected even if he/she has moved into the service area for portable telephones.

The existing software defined radio is based on the scheme of loading a necessary software program at the start of use, controlling the DSP with the software program, and performing communication. If, therefore, the user moves to a service area conforming to only a communication scheme that is incompatible with the currently used communication scheme during communication, handover cannot be done.

Assume that a software defined radio terminal that can be made to conform to different types of radio communication systems by interchanging software programs is performing communication by using a certain radio communication system. In this case, if the user moves out of the service area of this radio communication system, the channel of the radio terminal is disconnected.

Assume that the user has moved to an area based on a radio communication system different from the currently used system. In this case, even if this area allows the user to use the software defined radio terminal, the radio unit must be restarted upon loading of a software program required for this radio communication system. That is, the existing software defined radio is only versatile in coping with communication schemes by using software programs, but any higher convenience cannot be expected.

A software defined radio is a mobile terminal, which is used for communication at the place where the user has moved or during movement. It is therefore most required for such a radio unit to prevent disconnection of a channel during communication in consideration of services, and hence the immediate establishment of a technique for such improvement is an urgent necessity.

We acknowledge the disclosure in US Patent 6052600 of a method of checking for a valid licence in a software-defined radio device and providing a licence or authorisation to operate in a network. The software-defined radio according to the above US Patent 6 05 2600 disclosure can operate in multiple wireless of different technology standards. For operation in a desired network, a software reconfiguration of the radio is performed.

It is an object of the present invention to provide a software defined radio terminal apparatus which enables handover when the apparatus moves to the service area based on a communication scheme different from the currently used communication scheme, and a handover method for the software defined radio terminal apparatus.

The invention provides radio apparatus as defined in Claim 1, and a handover control method as defined in Claim 4.

In a radio apparatus having the above arrangement, a plurality of system modules obtained by converting the functions for the respective radio communication systems into software modules may be prepared to implement signal processing for transmission/reception processing in the respective types of radio communication systems. In addition, a programmable signal processing device which executes signal processing in accordance with the system module corresponding to a specific radio communication system may be used as a signal processing device which processed a signal transmitted/received by radio in the radio apparatus. When moving in the service areas of a cellular system in which service areas of a plurality of radio communication systems based on different communication schemes at least overlap each other, in the radio apparatus, in an overlapping service area between a plurality of types of radio communication systems, a system module corresponding to a destination radio communication system is allocated to the signal processing device instead of a system module corresponding to the currently used radio communication system when an handover condition is satisfied, thereby performing signal processing corresponding to the destination radio communication system. This makes it possible to execute handover between different radio communication systems.

According to the present invention, therefore, there is provided a radio apparatus which can smoothly execute handover between different types of radio communication systems.

Assume that A- and B-radio communication system are present as cellular systems, and there is an overlapping area between the service areas of the respective base stations. In this case, when the radio apparatus moves to the overlapping area, system modules corresponding to a destination radio communication system are allocated to the signal processing device as well as system modules corresponding to the currently used radio communication system when a handover condition is satisfied. This allows the radio apparatus to perform signal processing corresponding to the B-radio communication system as the destination radio communication system as well as signal processing corresponding to the A-radio communication system with which the radio apparatus is currently communicating. That is, when the radio terminal exists in the overlapping area between the service area of the A-system and the service area of the B-system, the radio terminal can simultaneously communicate with a base station of the A-system and a base station of the B-system.

As described above, therefore, there is provided a radio apparatus which can smoothly execute handover between different types of radio communication systems by being set in a state where it can simultaneously communicate with a plurality of types of radio communication systems, and keeping one of the radio communication systems which is in a good state afterward while generating a request to disconnect communication with the remaining radio communication system.

According to the present invention, there are provided a software defined radio apparatus and a handover control method for the radio apparatus, in which when a radio terminal moves between the service areas of radio communication systems based on different schemes, communication can be performed by using different radio communication systems in a good state at different times, and communication can be continuously performed between radio communication systems based on different schemes by handover.

The invention can be more fully understood from the following detailed description of preferred embodiments, when taken inconjunction with the accompanying drawings, in which:
FIG. 1 is a view for explaining the present invention and, more specifically, an example of a cellular system including different types of radio communication systems on which the present invention is based;
FIG. 2 is a view for explaining a pilot channel;
FIG. 3 is a block diagram for explaining the present invention and, more specifically, an example of the arrangement of a software defined radio terminal according to the first embodiment of the present invention;
FIG. 4 is a block diagram for explaining the present invention and, more specifically, another example of the arrangement of the software defined radio terminal according to the first embodiment of the present invention;

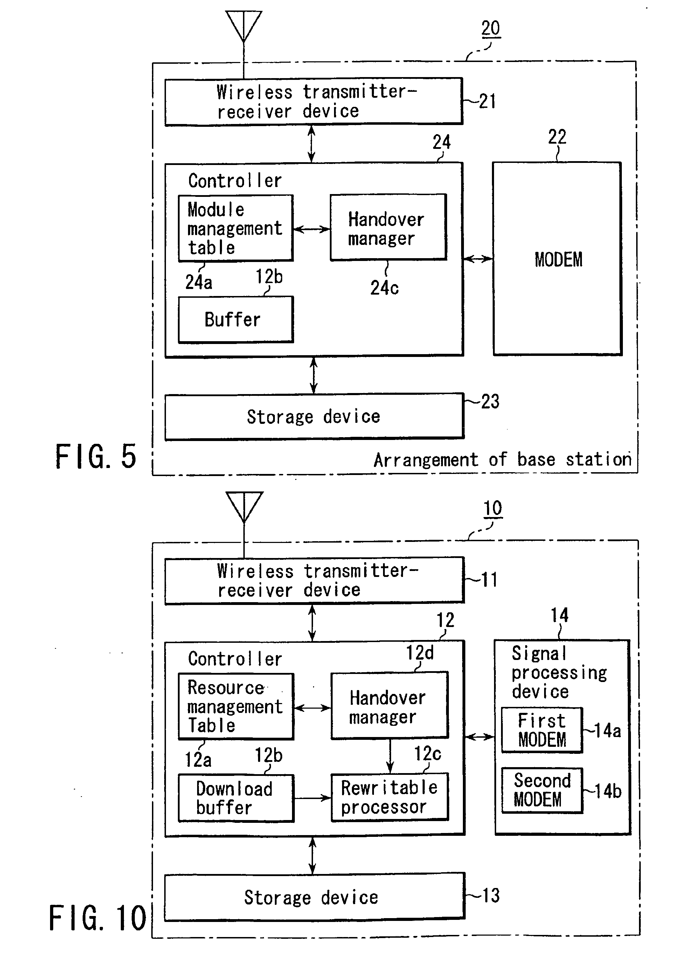

FIG. 5 is a block diagram for explaining the present invention and, more specifically, an example of the arrangement of a base station;
FIGS. 6A and 6B are views for explaining the present invention and, more specifically, an example of the arrangement of a resource management table used by a software defined radio terminal according to the present invention;
FIG. 7 is a view for explaining the present invention;
FIG. 8 is a view for explaining the present invention and, more specifically, operation transition between a terminal, base stations, and a mobile switching center as an example of handover in a standby state according to the first embodiment of the present invention;
FIG. 9 is a flow chart for explaining the present invention and; more specifically, an example of handover during a standby state of a software defined radio terminal according to the first embodiment of the present invention;
FIG. 10 is a block diagram for explaining the present invention and, more specifically, an example of the arrangement of a software defined radio terminal according to the second embodiment of the present invention;
FIG. 11 is a view for explaining the present invention and, more specifically, operation transition between a terminal, base stations, and a mobile switching center as an example of handover during communication according to the second embodiment of the present invention;
FIG. 12 is a flow chart for explaining the present invention and, more specifically, an example of handover during communication using a software defined radio terminal according to the second embodiment of the present invention;
FIG. 13 is a view for explaining the present invention and, more specifically, an example of a cellular system including various types of radio communication systems on which the present invention is based;
FIG. 14 is a flow chart for explaining the present invention and, more specifically, an example of handover during communication using a software defined radio terminal according to the third embodiment of the present invention;
FIG. 15 is a view for explaining the present invention and, more specifically, operation transition between a terminal, base stations, and a mobile switching center as an example of handover during communication using a software defined radio terminal according to the fourth embodiment of the present invention; and
FIG. 16 is a flow chart for explaining the present invention and, more specifically, an example of handover during communication using a software defined radio terminal according to the fourth embodiment of the present invention.

The present invention provides a software defined radio terminal apparatus which can perform smooth handover in moving to a service area.based on a communication scheme different from the currently used communication scheme, and a handover control method for the software defined radio terminal apparatus. An embodiment of the present invention will be described below.

The preferred embodiments concern a software defined radio which can perform high-speed processing and reconstruct a terminal configuration. Attempts are being made to reduce the size of a radio terminal such as a portable telephone by using LSI electronic components. A commercially available radio terminal LSI incorporates a processor, memory, logic circuit, and the like. Such a processor, memory, and logic circuit are resources required to execute various processes, e.g., radio signal processing, protocol processing, terminal control, and man-machine interfacing. Communication using a radio terminal is implemented by the processing performed by these resources.

The software defined radio to which the present invention may be applied is desired to adaptively control these resources to allow effective use of the limited resources. In addition, it can be designed to change its management method to change the terminal performance in accordance with changes in operating conditions and to cope with a system change.

In practice, the resources realize necessary processing of radio signals and data by interchanging information such as data and program modules under the control of a handover manager for controlling the resources. In order to make desirable changes in the function of the resource portion by updating the method of using the software and logic circuit, the resource portion of the handover manager and resources in the software defined radio terminal to which the present invention is applied is constituted by a processor, memory, and logic circuit. These components are integrated into an LSI (Large Scale Integrated circuit).

The processor, memory, and logic circuit formed in the LSI are resources for executing radio signal processing, protocol processing, terminal control, man-machine interfacing, and the like. A resource portion that can be implemented by software processing without posing any problem is implemented by a general-purpose processor and memory. A resource portion that demands high processing speed is implemented by a processor dedicated to signal processing computation or hardware logic. A processor dedicated to signal processing computation used in this case performs computations for required signal processing according to software under the control of the handover manager. A logic circuit used in this case is designed to rearrange the circuit configuration for implementing target processing with a high degree of freedom. Communication in the radio terminal is realized through the processing performed by these resources.

By adaptively controlling these resources, the limited resources on the radio terminal can be effectively used. In addition, by changing the management method, changes in the performance of the terminal with changes in operating conditions, system changes, and the like can be properly handled with a high degree of freedom. In this case, the function of the handover manager is implemented in the form of a program operating on a CPU (Central Processing Unit). However, this function can also be implemented on a DSP or by a sequencer using a logic circuit.

Embodiments of the present invention will be described below. For the sake of simplicity, assume that in this embodiment, two systems, namely, an A-radio communication system and a B-radio communication system, provide radio communication services, and the software defined radio according to the present invention can use the two systems while arbitrarily moving between them. Assume in this case that the A-radio communication system managed by a carrier A to provide services, and the B-radio communication system is managed by a carrier B to provide services.

Embodiments of the present invention will be described with reference to the views of the accompanying drawing. The basic arrangement of a radio terminal to which the present invention is applied will be described first.

### (Basic Arrangement of Terminal)

As is known, according to mobile communication systems for portable telephones and PHSs, base stations 20 (20A1 through 20An, 20B1 through 20Bn,...) are distributed for the respective radio communication systems, and the ranges in which the respective base stations 20 (20A1 through 20An, 20B1 through 20Bn,...) can transmit/receive radio waves are respectively defined as service areas 30 (30A1 through 30An, 30B1 through 30Bn,...), in which the respective base stations connect mobile communication terminals (radio terminals) conforming to communication schemes used in the respective areas to communication networks such as a telephone network so as to allow communication. The present invention has a programmable MODEM to flexibly conform to radio communication systems based on different types of existing communication schemes, and adaptively changes the software for the MODEM or adds software as needed to match with the radio communication system that provides services in the area where the local terminal exists. This makes it possible for the user to continue communication while moving between the service areas of different types of radio communication systems, i.e., to perform handover.

A software defined radio terminal 10 of the present invention is configured to measure the power (electric field strength) of a pilot channel transmitted from each of the base stations 20 (20A1 through 20An, 20B1 through 20Bn,...) corresponding to the current position of the radio terminal 10 itself. In this terminal, the settings in a programmable MODEM can be changed/controlled to allow communication with a base station with appropriate power (electric field strength).

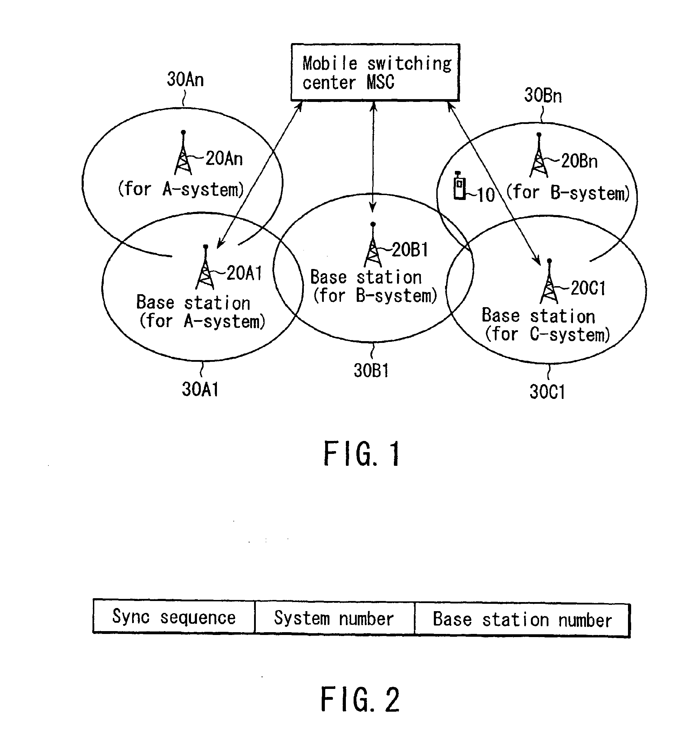

In this case, as the pilot channel, for example, a signal like the one shown in FIG. 2 is used, which is constituted by a sync sequence, system number, and base station number. The sync sequence is a bit sequence for establishing synchronization. The system number is a code number indicating the specific radio communication system. The base station number is a unique number assigned to a base station in advance and used to specify which base station is transmitting the signal.

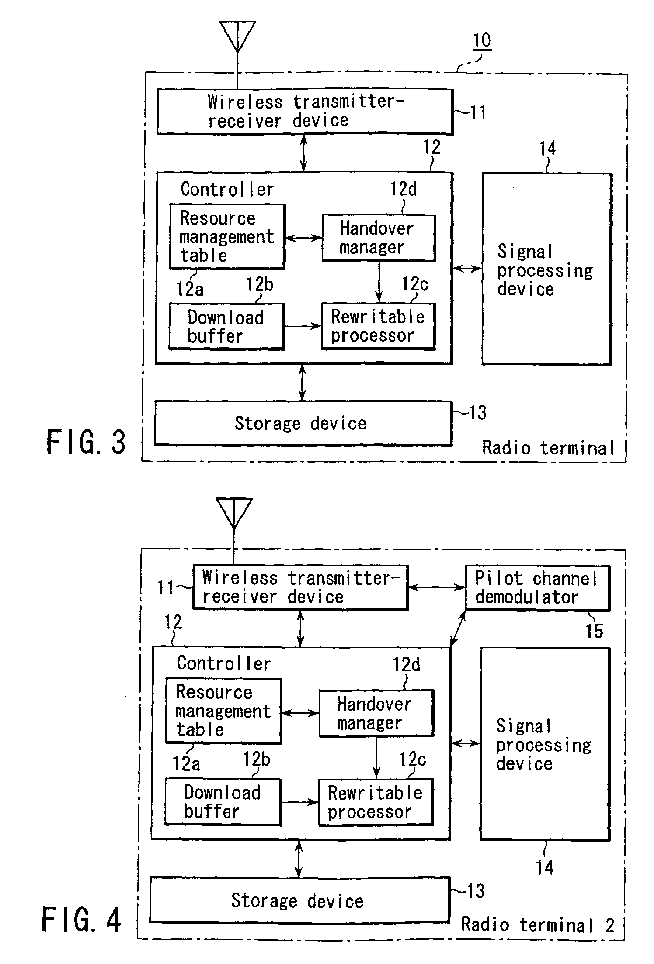

As shown in FIG. 3, for example, the software defined radio terminal 10 according to the present invention is comprised of at least a wireless transmitter-receiver device 11 for transmitting information to radio base stations by executing analog radio signal processing required for radio communication between the base stations 20 (20A1 through 20An, 20B1 through 20Bn,...), a controller 12 serving as a center for various control operations, a storage device 13 storing programs and information, and a signal processing device 14 for modulating/demodulating signals transmitted through the wireless transmitter-receiver device 11. The device 14 can change various system modules describing necessary processing functions implemented by software, reconstruct processing contents by changing the system modules, and execute signal processing such as modulation/demodulation processing in accordance with the system modules, thus serving as signal processing resources for required signal modulation/demodulation processing.

The signal processing device is a circuit capable of reconstructing signal processing contents in accordance with the contents of software by rewriting the software like an FPGA (Field Programmable Gate Array), PLD (Programmable Logic Device), and DSP (Digital Signal Processor).

The above system modules are as follows. The FPGA module is a modulation/demodulation execution file that can be directly executed by the FPGA. Likewise, the PLD and DSP modules are modulation/demodulation execution files that can be directly executed by the PLD and DSP, respectively. These modules are respectively formed as software modules, each formed into one unit on a function basis. In this case, each software module as one unit will be referred to as a system module.

The function of the signal processing device 14 as one of the important constituent elements of the present invention will be briefly described below.

Consider a case where the present invention is applied to a system capable of simultaneously performing a plurality of communications by the spread spectrum technique using signals in the same frequency band, e.g., a radio communication system based on the CDMA (Code Division Multiple Access) scheme or a PDC radio communication system based on a scheme using a pilot channel. Assume that different scrambling codes are respectively used for radio communication systems of different CDMA carriers.

As is known, according to the CDMA scheme, signals modulated by the spread spectrum scheme are multiplxed and transmitted. In, for example, a scheme using direction spread spectrum, a carrier wave is modulated by using a PN (Pseudo Noise) code having a bit rate higher than the rate of information to be communicated, and transmits the modulated signal upon spreading the frequency. On the receiving side, only a signal having the same bit sequence as that of the PN code is extracted from the received radio waves by using a correlator, and the signal is reconstructed into information data. In this scheme, even if an interference component or noise is superimposed on a signal during transmission, since the interference component or the like is despread at the time of reconstruction processing on the receiving side. With this operation, the absolute level of the resultant signal becomes sufficiently low as compared with the demodulated signal component. As a consequence, this scheme is not susceptible to the influence of interference or noise.

To allow handover between a base station of the A-radio communication system and a base station of the B-radio communication system provided by a carrier different from that of the A-radio communication system, a pilot channel for identifying the service area of the system where the radio terminal is present must always be transmitted from both the base stations of the A- and B-radio communication systems. Assume that all radio communication systems, e.g., the A, B, and C radio communication systems, use a common modulation scheme for this pilot channel, and the radio terminal 10 is designed to decode this pilot channel even if it does not have a MODEM circuit unique to a corresponding radio communication system.

FIG. 2 shows an example of this pilot channel, which has a format common to all radio communication systems and includes a system identification number, base station number, and sync sequence. The radio terminal 10 has a means for decoding the pilot channel.

The radio terminal 10 having the means for decoding this pilot channel may be realized by loading a system module for a pilot channel decoding function into the signal processing device 14 shown in FIG. 3 in advance or incorporating a pilot channel demodulator 15 serving as hardware for demodulating the pilot channel in the terminal in advance as shown in FIG. 4.

First of all, the radio terminal 10 functions to identify a system number (the A-radio communication system or B-radio communication system and protocol version in this case) with this pilot channel and form a MODEM function or MODEM circuit corresponding to the radio communication system. Assume that a circuit configuration required for each radio communication system is known to the radio terminal 10. Alternatively, the present invention may use a scheme of notifying the radio terminal 10 of circuit configuration information contained in this pilot channel. The signal processing device 14 is designed such that if a plurality of pilot channels (the A-radio communication system and B-radio communication system) are received, a radio communication system corresponding to a pilot channel exhibiting a large power value is selected, and the pilot channel is demodulated.

Consider a case where the present invention is applied to a scheme of performing a plurality of communications by using signals in the same frequency band based on the spread spectrum technique, e.g., a scheme in which a pilot channel is present in a CDMA or PDC scheme radio communication system. Assume that different scrambling codes are used for the respective radio communication systems provided by different carriers.

In order to allow the software defined radio (SDR) terminal 10 of the present invention to be used between different types of radio communication systems upon switching under this environment, the radio terminal 10 is configured to measure the power (Received Signal Strength Indicator; RSSI) of a pilot channel transmitted from each of the base stations 20 (20A1 through 20An, 20B1 through 20Bn,...) of each radio communication system. For this purpose, the software defined radio terminal 10 has a pilot channel power measuring function (pilot channel electric field strength measuring function). To implement this function, the software defined radio terminal 10 may have a code generator (a generator which generates a scrambling code and is designed to generate a scrambling code suited to a remote radio communication system with which the communication terminal is currently communicating because different scrambling codes are used for the respective radio communication systems provided by the respective carriers) which corresponds to each radio communication system and a correlator.

A system module (program module) for allowing the radio terminal to operate in a given radio communication system when it enters the service area of the system includes a function of decoding a control channel and data channel. For such a function, the software defined radio terminal may have a short code generator for generating short codes corresponding to a control channel and data channel and a despreading unit for performing despread spectrum processing.

Although a function for estimating a channel response is required, this function may be implemented by a correlator and scrambling code generator. By using the result obtained by this function, data from a data channel or control channel is decoded. The software defined radio terminal 10 can be made to operate by using software modules that implement these functions.

### (Functions of Base Station and Mobile Switching Center)

A base station of a radio communication system to which the present invention is applied, for example, periodically transmits the above pilot channel. In a system to which the present invention is applied, handover is performed when a radio terminal moves from the A-radio communication system to the B-radio communication system (or vice versa). For example, the following functions are required for each base station 20 and a mobile switching center MSC to perform such handover.

The mobile switching center MSC must be connected to the base station 20A of the A-radio communication system and the base station 20B of the B-radio communication system to transmit/receive a control signal. This control signal is used as follows. When the radio terminal 10 performs handover from the A-radio communication system to the B-radio communication system (or vice versa), the software defined radio terminal 10 notifies the base station 20A of the A-radio communication system of the corresponding information first. Thereafter, the base station 20A of the A-radio communication system uses this control signal to notify the mobile switching center MSC of the corresponding information.

Upon reception of this notification, the mobile switching center MSC notifies the base station 20B of the B-radio communication system, which is the handover destination of the radio terminal 10, of the corresponding information by using the control signal.

Before the handover, the mobile switching center MSC transmits only to the base station 20A of the A-radio communication system information transmitted from a network to the radio terminal 10. However, once the execution of handover is determined, the mobile switching center MSC transmits the same information to the base station 20B of the B-radio communication system while keeping transmitting the information to the base station 20A of the A-radio communication system. When the radio terminal 10 begins to communicate with the base station 20B of the B-radio communication system, the radio terminal 10 notifies the base station 20A of the A-radio communication system of the corresponding information. The base station 20A of the A-radio communication system then notifies the mobile switching center MSC of the corresponding information by using the control signal. MSC has a function of stopping the transmission of information for the radio terminal 10 to the base station 20A of the A-radio communication system upon reception of this notification.

Note that the control signal contains "radio terminal identification number" (ID information unique to the radio terminal), "handover source base station number, (ID information unique to the base station that has been relaying communication of the radio terminal that is to perform handover), "handover destination base station number" (ID information unique to the base station that is to take over communication relaying for the radio terminal that is to perform handover), and the like.

Specific examples will be described below. A radio communication system including a software defined radio terminal according to the present invention will be described first, which can perform handover in a standby state during movement between service areas based on different communication schemes.

### (First Embodiment)

The first embodiment shows a specific example of a software defined radio terminal and an arrangement of a base station according to the present invention, which allow handover in a standby state.

As shown in FIG. 3, a software defined radio terminal 10 according to the present invention is comprised of at least a wireless transmitter-receiver device 11 for transmitting information between base stations on the network side, a controller 12 serving as a center for various control operations, a storage device 13 storing programs and information, and a signal processing device (resource) 14 which can implement predetermined modulation/demodulation processing in accordance with a provided program module.

In this case, the signal processing device 14 is a circuit capable of reconstructing processing contents by changing (rewriting) software such as an FPGA (Field Programmable Gate Array), PLD (Programmable Logic Device), and DSP (Digital Signal Processor).

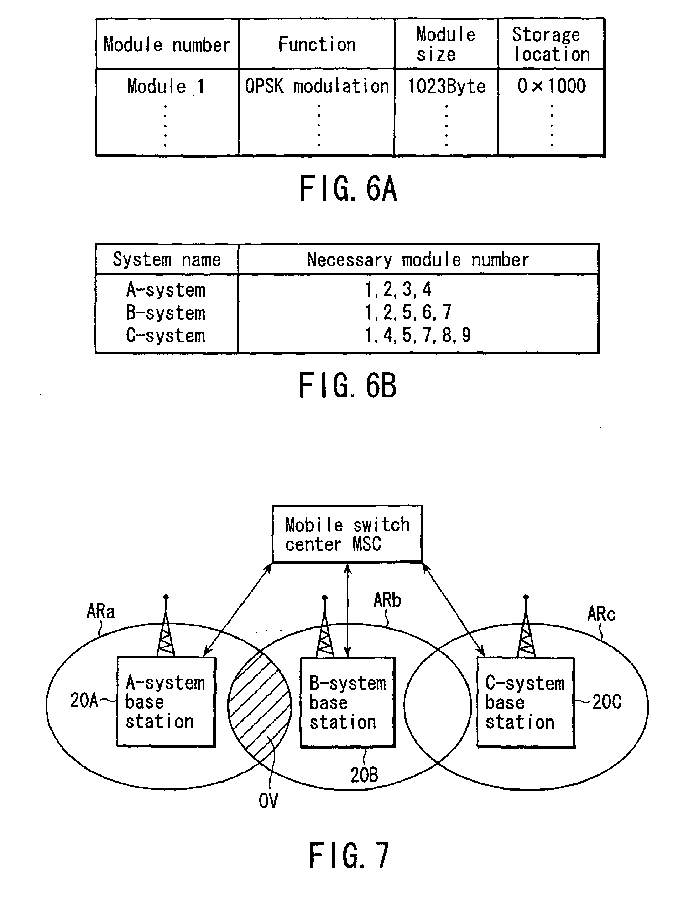

The controller 12 of the software defined radio terminal 10 according to the present invention is comprised of a resource management table 12a which holds resource management information, a download buffer 12b for temporarily holding downloaded data and the like, a rewritable processor 12c for rewriting a given module into a required program module in accordance with the signal processing device (resource) 14, and a handover manager 12d for controlling handover. In the resource management table 12a, the module (program module) currently used by the software defined radio terminal 10 and module configurations required for the respective radio communication systems (the different radio communication systems of the respective carriers will be referred to as an A-system, B-system, C-system, and the like hereinafter) are registered and held in advance, as shown in FIGS. 6A and 6B.

The resource management table 12a shown in FIGS. 6A and 6B will be described below. This resource management table 12a is comprised of a module information table section (FIG. 6A) and system-specific module configuration table section (FIG. 6B). The module information table section in FIG. 6A is used to store information, e.g., a module number which is the identification code of each program module, the function of the program module (e.g., QPSK modulation), the program size of the module, and the storage location. The system-specific module configuration table section in FIG. 6B is used to store information about module numbers required for the respective radio communication systems such as an A-system (A-radio communication system), B-system (B-radio communication system), and C-system (C-radio communication system).

In addition to the handover control function, the handover manager 12d has the above handover manager function and a function of reading out module information (the information of a necessary program) required for the A-system from the resource management table 12a, and collecting necessary modules by downloading the necessary modules from the software defined radio terminal 10 or a base station 20.

The handover manager 12d also has a function of checking whether the system modules (program modules) required for operation in a radio communication system are held in the storage device 13 incorporated in the software defined radio terminal 10 (note that a set of system modules required for each system is known in advance by the software defined radio terminal 10 or can be known through a notification channel from each base station), a function of notifying, when it is determined upon the check that necessary system modules are held in the storage device 13, the controller 12 of the corresponding information, and a function of notifying, when a shortage of necessary modules is detected (i.e., the program modules held in the storage device 13 are insufficient or no program modules are held), the controller 12 of the corresponding information.

The controller 12 has a function of detecting a specific radio communication system from which communication services can be received, on the basis of the electric field strength levels of pilot channels received from base stations, a function of reading out a system module required for the radio communication system that can provide communication services from the storage device 13, and making settings in the signal processing device 14 with the system module by using the function of the rewritable processor 12c, and a function of transmitting, when the handover manager 12d detects a system module shortage, the contents of the detected information (a lack of a program required for operation in the above radio communication system) and a transmission request to the base station of the radio communication system, and a function of storing/holding, upon reception of the system module transmitted from the base station side in accordance with this transmission request through the wireless transmitter-receiver device 11, the received system module in the storage device 13, reading out the system modules required for the radio communication system that can provide communication services from the storage device 13 in accordance with the notification from the handover manager 12d, and making settings in the signal processing device 14 with the system modules by using the function of the rewritable processor 12c.

The rewritable processor 12c is configured to rewrite modules for the signal processing device (resource) 14. The rewritable processor 12c rewrites the modules collected by the handover manager 12d and stored in the storage device 13 with respect to the signal processing device 14, as needed, to make settings in the signal processing device 14 so as to allow it to execute modulation/demodulation processing required for the corresponding system, e.g., the A-system (A-radio communication system) or B-system (B-radio communication system), thus allowing data communication with the base station of the corresponding system.

As shown in FIG. 1, radio communication systems (on the network side) that allow the software defined radio terminal 10 according to the present invention to perform handover are comprised of base stations 20 (20A1 through 20An, 20B1 through 20Bn, ...) and a portable telephone terminal MSC configured to manage the respective radio communication systems as a whole. The mobile switching center MSC registers the position of the moving software defined radio terminal 10 and performs switched connection control to designate a specific base station 20 through which signals are originated/terminated from/to the software defined radio terminal 10. Each of the base stations 20 (20A1 through 20An, 20B1 through 20Bn,...) of the respective systems is comprised of a wireless transmitter-receiver device 21 for transmitting a pilot channel and transmitting information to the software defined radio terminal 10 existing in the local service area, a MODEM (having a modulation function and demodulation function) 22 for modulating a transmission signal and sending it to the wireless transmitter-receiver device 21 or demodulating a signal received by the wireless transmitter-receiver device 21, a storage device 23 which stores information and data, and a controller 24 for performing various control operation in the base station.

Each base station 20 holds, in the storage device 23, system modules required for the software defined radio terminal 10 to operate in the corresponding system. The controller 24 transmits system modules in accordance with a request from the software defined radio terminal 10.

Each base station 20 further includes a function of detecting the difference between the system modules held in the software defined radio terminal 10 and the system modules required for the system when a system module transmission request is received from the software defined radio terminal 10.

This function is possessed by the controller 24 in each base station 20. More specifically, module information (module numbers) required for the local system is recorded in a module management table 24a of the controller 24 in each base station 20 in advance. The controller 24 compares this information with the system module information held in the software defined radio terminal 10 to detect the difference from the necessary system modules, thereby checking whether the system modules required for communication in the local system are held in the software defined radio terminal 10. Assume that the software defined radio terminal 10 has moved to the service area of the A-system. In this case, module numbers required for the A-system are presented to the base station 20A of the A-system in the module management table 24a of the controller 24, and a handover manager 24c in the controller 24 of the base station 20 detects the difference between the necessary modules and the modules currently held in the software defined radio terminal 10 upon comparison, thereby implementing the above function.

If, for example, the service area where the radio terminal 10 is located is a service area provided by the B-system, the software defined radio terminal 10 needs to be started to match with the B-system. If the radio terminal 10 is located in the service area provided by the A-system, the radio terminal 10 needs to be started to match with the A-system. Assume that the modules required to operate the software defined radio terminal 10 in accordance with A-system are "program module 1", "program module 2", "program module 3", and "program module 4". Assume also that the modules required to operate the software defined radio terminal 10 in accordance with B-system are "program module 1", "program module 2", "program module 5", "program module 6", and "program module 7". In this case, to allow the software defined radio terminal 10 which is currently operating in the A-system to operate in the B-system, "program module 5", "program module 6", and "program module 7" may be downloaded to provide them for the signal processing device (resource) 14 so as to reconstruct it to allow the execution of processing required in the B-system.

In this embodiment, the handover manager 24c in the controller 24 of each base station 20 has the function of detecting the difference between necessary program modules and the program modules currently held in the software defined radio terminal 10 upon comparison while referring to the resource management table 12a, and detecting a lack of a specific program module. The controller 24 of the base station 20 has the function of providing the MODEM 22 with the information of the lacking program module detected by the handover manager 24c. Upon reception of the information of this lacking program module, the MODEM 22 sends a transmission signal obtained by modulating this information into an electrical signal to the wireless transmitter-receiver device 21 to transmit it to the software defined radio terminal 10.

In the software defined radio terminal 10 according to this embodiment, this transmission signal is received by the wireless transmitter-receiver device 11 and transferred to the controller 12. The controller 12 has a function of detecting a lacking program module from this signal and generating a transmission request to download the lacking program module from the base station 20.

This transmission request is sent from the controller 12 to the wireless transmitter-receiver device 11. The request is then converted into a radio signal by the wireless transmitter-receiver device 11 and transmitted to the base station 20. Upon reception of this request, the base station reads out the corresponding program module from the storage device 23, and transmits it through the wireless transmitter-receiver device 21. The software defined radio terminal 10 then receives this module through the wireless transmitter-receiver device 11, and sends it to the controller 12. The controller 12 stores the program module in the download buffer 12b. In order to improve the function of the signal processing device 14, the rewritable processor 12c reads out this downloaded program module buffered in the download buffer 12b and providing it for the signal processing device 14.

With this operation, the lacking program module is replenished, and the signal processing device 14 performs signal processing in accordance with the A- and B-systems, thus allowing communication with base stations of the A- and B-systems.

As shown in FIG. 7, the A- and B-systems are different types of systems. Assume that the A-system is a WCDMA system, and the B-system is a PDC system.

There are service areas ARa and ARb of the A- and B-systems. Assume that there is an overlapping portion OV where the service areas of the respective systems overlap each other. The base station 20A of the A-system and the base station 20B of the B-system are designed to transmit pilot channels. The software defined radio terminal 10 has a measurement means for receiving the pilot channels transmitted from the respective base stations 20A and 20B and measuring the powers (electric field strengths) of the channels.

When the software defined radio terminal 10 can communicate with the base stations 20A and 20B of the A- and B-systems, the software defined radio terminal 10 receives the pilot channels from the base stations 20A and 20B of the A- and B-systems, measure the powers of the pilot channels, and can obtain the measurement values. The controller 12 performs control to switch to one of the A- and B-systems which exhibits a higher electric field strength, thus allowing handover.

The function of the system of the present invention will be described in detail below.

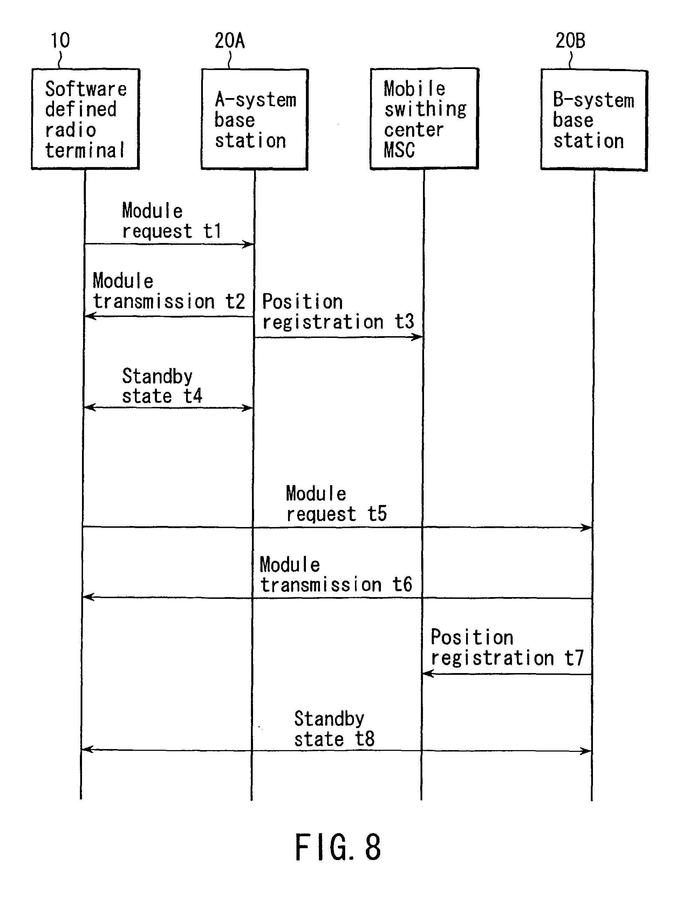

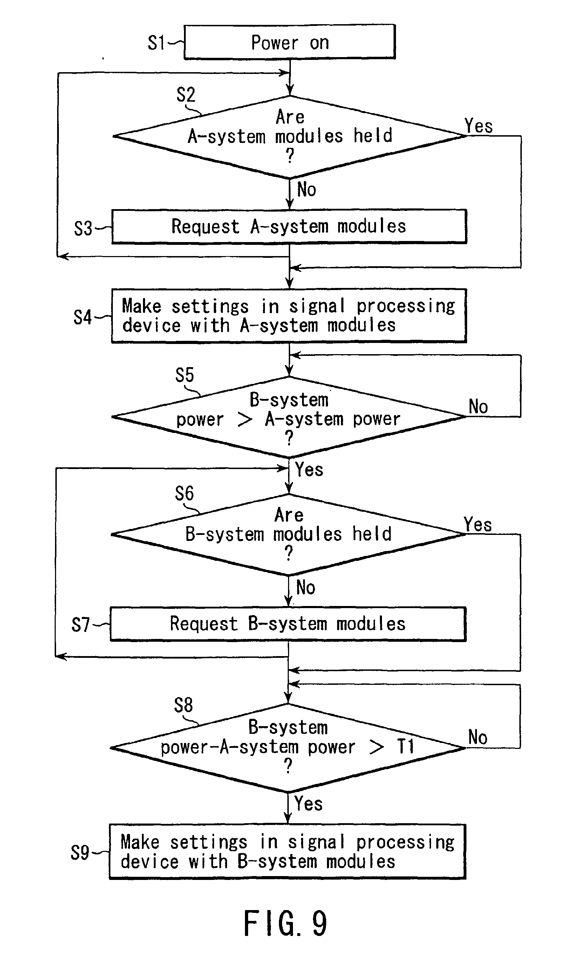

FIG. 8 is an operation transition diagram showing an example of how the software defined radio terminal 10, the base station 20A of the A-system, the base station 20B of the B-system, and the mobile switching center MSC operate upon movement of the software defined radio terminal 10 between the systems. FIG. 9 is a flow chart showing the operation of the software defined radio terminal 10 in this case. An example of operation upon movement of the software defined radio terminal 10 between the systems will be described with reference to FIGS. 8 and 9.

Assume that the software defined radio terminal 10 is located in the service area, of the service area ARa of the A-system, which is covered only by the A-system. When the user turns on the software defined radio terminal 10 in this state (step S1 in FIG. 9), the software defined radio terminal 10 receives a pilot channel from the base station 10A that takes charge of the service area ARa. From this pilot channel, the controller 12 of the software defined radio terminal 10 detects that communication services can be received in the A-system.

The handover manager 12d of this software defined radio terminal 10 then checks whether the system modules (program modules) required for operation in the A-system are held in the storage device 13 incorporated in the software defined radio terminal 10 (step S2 in FIG. 9). Assume that the software defined radio terminal 10 knows a set of system modules required for each system in advance or can know them through a notification channel from each base station.

If it is determined that the necessary system modules are held in the storage device 13 of the software defined radio terminal 10, the controller 12 reads out the system modules required for the A-system from the storage device 13, and makes settings in the signal processing device 14 with the system modules by using the function of the rewritable processor 12c (step S4 in FIG. 9).

If the handover manager 12d detects a lack of a necessary system module, i.e., there is a shortage of program modules held in the storage device 13 or no program module is held, the handover manager 12d notifies the controller 12 of the corresponding information. Upon reception of this notification, the controller 12 sends, to the base station of the A-system, a request to transmit the system modules required for operation in the A-system (step S3 in FIG. 9). That is, the controller 12 performs control to transmit such a transmission request message to the base station 20A (t1 in FIG. 8). With this operation, this transmission request is transmitted to the base station 20A through the wireless transmitter-receiver device 11 by radio.

The request message from the software defined radio terminal 10 indicates information about the system modules currently held in the local radio terminal. Therefore, a lacking module can be identified by detecting the difference between the contents of the information of the transmission request message and all the modules required for operation in the A-system. Upon reception of this transmission request message, therefore, the base station 20A detects the difference between the currently held modules and all the modules required for operation in the A-system, identifies the lacking module, reads out the lacking module from the storage device 23, and transmits it to the software defined radio terminal 10 (t2 in FIG. 8).

The software defined radio terminal 10 receives this module through the wireless transmitter-receiver device 11 and sending it to the controller 12. The controller 12 then performs control to store the system module for the A-system in the storage device 13. As a consequence, all the system modules required for the A-system are stored in the storage device 13.

The handover manager 12d checks whether the system modules (program modules) required for operation in the A-system are held in the storage device 13 incorporated in the software defined radio terminal 10.

As a result, since the necessary system modules are held in the storage device 13 this time, the handover manager 12d notifies the controller 12 of the corresponding information.

Upon reception of this notification, the controller 12 reads out the system modules for the A-system from the storage device 13. The controller 12 then makes settings in the signal processing device 14 with the system modules by using the function of the rewritable processor 12c (step S4 in FIG. 9).

With this operation, the signal processing device 14 can perform modulation/demodulation processing suitable for the A-system, and the software defined radio terminal 10 becomes a terminal that can perform communication in the A-system. When this state is established, the controller 12 notifies the base station 20A of the A-system of the completion of preparations.

Upon reception of this notification, the base station 20A of the A-system registers the position of the software defined radio terminal 10 with respect to the mobile switching center MSC (t3 in FIG. 8).

The base station 20A of the A-system is then set in a standby state with respect to the software defined radio terminal 10 (t4 in FIG. 8).

Assume that the software defined radio terminal 10 has moved into the overlapping service area of the A- and B-systems during the standby state in the A-system.

At this time, the software defined radio terminal 10 receives the pilot channels from both the A- and B-systems. The software defined radio terminal 10 then measures the powers of the received pilot channels from the A- and B-systems. Assume that the software defined radio terminal 10 detects, upon measurement, that the power of the pilot channel from the B-system is higher (step S5 in FIG. 9).

Upon this detection, in the controller 12 of the software defined radio terminal 10, the handover manager 12d checks whether the system modules (program modules) required to start the B-system are held in the storage device 13 incorporated in the software defined radio terminal 10 (step S6 in FIG. 9). If it is determined that no B-system modules are held in the software defined radio terminal 10 or there is a shortage of system modules, the handover manager 12d in the controller 12 of the software defined radio terminal 10 notifies the controller 12 of the corresponding information.

Upon reception of this notification, the controller 12 sends, to the base station of the B-system, a download request (transmission request) for the system modules required for operation in the B-system (step S7 in FIG. 9). That is, the controller 12 performs control to transmit the transmission request message of the corresponding information to the base station 20B of the B-system (t5 in FIG. 8).

With this operation, this transmission request is transmitted to the base station 20B through the wireless transmitter-receiver device 11 by radio.

At this time, the software defined radio terminal 10 notifies the base station 20B of the B-system of the system module information currently held in the storage device 13 (this request message indicates the information of the system modules currently held in the local storage device).

The base station 20B of the B-system refers to this notification information to compare the system modules held in the software defined radio terminal 10 with the system modules required to activate the B-system. The base station 20B then checks which system module is lacking. If there is a lacking system module, only the lacking system module is read out from the storage device 23 and transmitted to the software defined radio terminal 10 (t6 in FIG. 8).

The software defined radio terminal 10 receives the system module transmitted from the base station and transfers it to the controller 12. The controller 12 performs control to hold the system module for the B-system in the storage device 13. As a consequence, all the system modules required for the B-system are stored in the storage device 13.

The handover manager 12d checks whether the system modules (program modules) required for operation in the B-system are held in the storage device 13 incorporated in the software defined radio terminal 10.

Since it is determined this time that the necessary system modules are held in the storage device 13, the handover manager 12d notifies the controller 12 of the corresponding information.

Upon reception of this notification, the controller 12 of the software defined radio terminal 10 measures the power values of the pilot channels from the A- and B-systems. The controller 12 then compares them (step S8 in FIG. 9).

If it is determined as a result that the difference between the power value of the pilot channel from the A-system and the power value of the pilot channel from the B-system is equal to or larger than a threshold T1, the controller 12 of the software defined radio terminal 10 notifies the handover manager 12d of the corresponding information. The handover manager 12d then notifies the controller 12 of the specific system nodules required for operation in the B-system.

In accordance with this notification, the rewritable processor 12c in the controller 12 reads out the system modules for the B-system from the system modules held in the storage device 13, and makes settings in the signal processing device 14 with the read system modules by using the function of the rewritable processor 12c (step S9 in FIG. 9).

With this operation, the signal processing device 14 can operate in the B-system and perform modulation/demodulation processing suitable for the B-system. As a result, the software defined radio terminal 10 becomes a terminal that can perform communication in both the A-system and the B-system.

When such a state is set, the controller 12 notifies the base station 20B of the B-system of the completion of preparations.

Upon reception of this notification, the base station 20B of the B-system notifies the mobile switching center MSC that the position of the software defined radio terminal 10 should be registered (t7 in FIG. 8).

The base station 20B of the B-system is set in a standby state with respect to the software defined radio terminal 10 (t8 in FIG. 8).

With this operation, the software defined radio terminal 10 is switched from communication in the A-system to communication in B-system.

Assume that a C-system exists, and the software defined radio terminal 10 has moved into the service area of the C-system. In this case, if no C-system modules are present in the software defined radio terminal 10, lacking modules that are required for operation in the C-system are downloaded from the base station 20C of the C-system by the same method as described above.

In this embodiment, it is assumed that each software defined radio terminal can receive pilot channels transmitted from base stations of all the systems. However, a software defined radio terminal may not hold a module that allows the terminal to receive pilot channels from any base stations. In this case, when the terminal enters the service area of each system, a module for receiving a pilot channel is downloaded in the terminal. The subsequent operation is the same as that described in the above embodiment.

Note, however, that in order to allow a terminal to download a module for receiving a pilot channel when the terminal enters the service area of each system, a system configuration must be set in advance such that a channel common to the respective systems is prepared, and the module is downloaded through the channel.

In this manner, according to the present invention, handover in a standby state can be performed during movement between the service areas of different radio communication systems.

The above description is made on the radio communication system including the software defined radio terminal according to the present invention which can perform handover in a standby state during movement between the service areas of different radio communication systems. An example of allowing handover when a terminal which is performing communication while moving enters the service area based on a different communication scheme will be described next as the second embodiment (an example of handover during communication).

### (Second Embodiment)

An embodiment that allows handover during communication when a software defined radio terminal moves between the service areas based on different communication schemes will be described below.

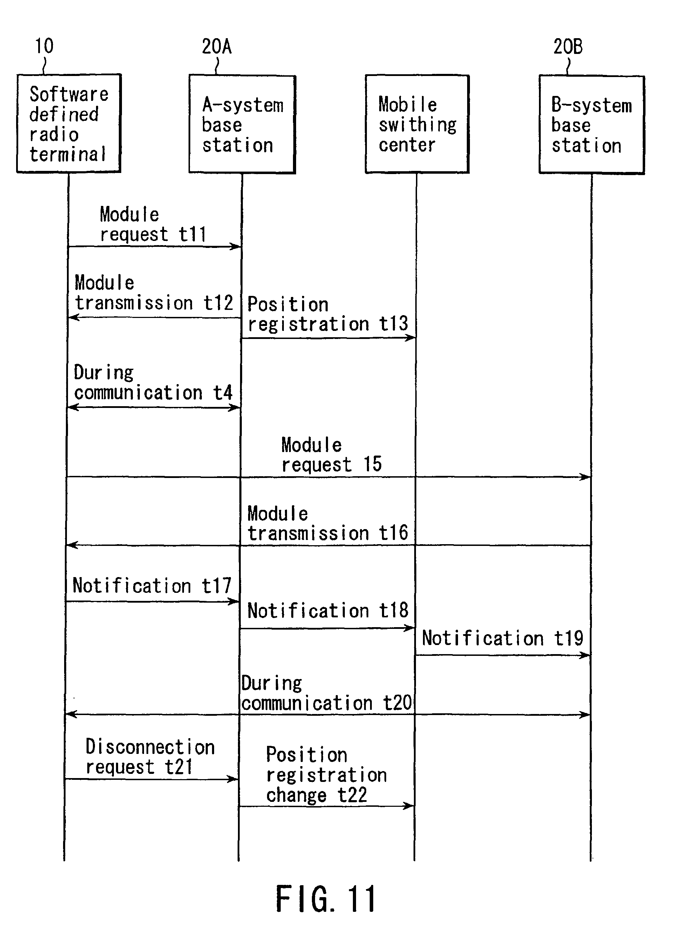

A software defined radio terminal 10 in this case has an arrangement like the one shown in FIG. 10, which is basically the same as that of the first embodiment. That is, this terminal includes at least a wireless transmitter-receiver device 11, controller 12, storage device 13, and signal processing device 14. As described above, the signal processing device 14 is a circuit that can be reconstructed by rewriting software such as an FPGA, PLD, or DSP. Assume that in this case, the program area of this device is divided into two areas (first MODEM 14a and second MODEM 14b).

In this embodiment, the signal processing device 14 has the two MODEMS, i.e., the first MODEM 14a and second MODEM 14b, and these two sections can be simultaneously operated to allow handover during communication while the terminal is moving between the service areas based on different communication schemes.

Base stations 20A, 20B, and 20C of different systems hold system modules required for the software defined radio terminal 10 to operate in the respective systems. Each station has a function of transmitting such system modules in accordance with a request from the software defined radio terminal 10. In addition, like each base station in the first embodiment, each of the base stations 20A, 20B, and 20C has a function of detecting, in response to a system module transmission request from the software defined radio terminal 10, the difference between the system modules held in the software defined radio terminal 10 and the system modules required for the corresponding one of the base stations 20A, 20B, and 20C.

As in the above description, services based on different communication schemes, e.g., an A-system and B-system, pilot channels are respectively transmitted from the base stations 20A and 20B of the A- and B-systems, and the software defined radio terminal 10 includes a measurement means for receiving the pilot channel transmitted from each base station and measuring the power (electric field strength) of the channel. This arrangement can be used for control on handover, i.e., switching the connection to a base station in a better condition in accordance with the magnitude of the power (electric field strength) of each measured pilot channel.

The function of the apparatus according to this embodiment will be described next.

### <Power-On Time>

Assume that there are service areas ARa and ARb of the A- and B-systems, and there is an overlapping portion OV where the service areas ARa and ARb of the respective systems overlap each other. Assume that the software defined radio terminal 10 is present in an area covered by only the A-system at first. When the software defined radio terminal 10 is turned on in this state, the controller 12 checks whether the system modules required for operation in the A-system are held in the storage device 13. If it is determined that the system modules are held, the controller 12 reads out the system modules for the A-system from the storage device 13, and makes settings in the signal processing device 14 with these system modules.

In this case, for example, the system modules are written in the first MODEM 14a of the signal processing device 14 to make settings so as to allow communication in the A-system.

Assume that the software defined radio terminal 10 is present in a service area, of the service area ARa of the A-system, which is covered by only the A-system. If the user turns on the software defined radio terminal 10 in this state, the software defined radio terminal 10 receives a pilot channel from the base station 20A that takes charge of the service area ARa. From this pilot channel, the controller 12 of the software defined radio terminal 10 knows that communication services can be received in the A-system.

The handover manager 12d of this software defined radio terminal 10 then checks whether the system modules (program modules) required for operation in the A-system are held in the storage device 13 incorporated in the software defined radio terminal 10. Assume as in the above description that the software defined radio terminal 10 knows a set of system modules required for each system in advance or can know them through a notification channel from each base station.

If it is determined that the necessary system modules are held in the storage device 13 of the software defined radio terminal 10, the controller 12 reads out the system modules required for the A-system from the storage device 13, and makes settings in the signal processing device 14 with the system modules by using the function of the rewritable processor 12c.

If a handover manager 12d detects a lack of a necessary system module, i.e., there is a shortage of program modules held in the storage device 13 or no program module is held, the handover manager 12d notifies the controller 12 of the corresponding information. Upon reception of this notification, the controller 12 sends, to the base station of the A-system, a request to transmit the system modules required for operation in the A-system. That is, the controller 12 performs control to transmit such a transmission request message to the base station 20A (t11 in FIG. 11). With this operation, this transmission request is transmitted to the base station 20A through the wireless transmitter-receiver device 11 by radio.

The request message from the software defined radio terminal 10 indicates information about the system modules currently held in the local radio terminal. Therefore, a lacking module can be identified by detecting the difference between the contents of the information of the transmission request message and all the modules required for operation in the A-system. Upon reception of this transmission request message, therefore, the base station 20A detects the difference between the currently held modules and all the modules required for operation in the A-system, identifies the module corresponding to the difference (the lacking module), reads out the module corresponding to the difference from the storage device 23, and transmits it to the software defined radio terminal 10 (t12 in FIG. 11).

The software defined radio terminal 10 receives this module through the wireless transmitter-receiver device 11 and sends it to the controller 12. The controller 12 then performs control to store the system module for the A-system in the storage device 13. As a consequence, all the system modules required for the A-system are stored in the storage device 13.

The handover manager 12d checks whether the system modules (program modules) required for operation in the A-system are held in the storage device 13 incorporated in the software defined radio terminal 10.

As a result, since the necessary system modules are held in the storage device 13 this time, the handover manager 12d notifies the controller 12 of the corresponding information.

Upon reception of this notification, the controller 12 reads out the system modules for the A-system from the storage device 13. The controller 12 then writes the above system modules in, for example, the program area of the first MODEM 14a of the signal processing device 14 by using the function of the rewritable processor 12c, thereby making settings that allow communication based on the A-system.

With this operation, the signal processing device 14 can perform modulation/demodulation processing suitable for the A-system, and the software defined radio terminal 10 becomes a terminal that can perform communication in the A-system. When this state is established, the controller 12 notifies the base station 20A of the A-system of the completion of preparations.

Upon reception of this notification, the base station 20A of the A-system registers the position of the software defined radio terminal 10 with respect to the mobile switching center MSC (t13 in FIG. 11).

The base station 20A of the A-system is then set in a standby state with respect to the software defined radio terminal 10.

In this case, if the software defined radio terminal 10 receives an incoming call, the software defined radio terminal 10 can perform communication in the A-system by performing responding operation (t14 in FIG. 11).

### <Handover during Communication>

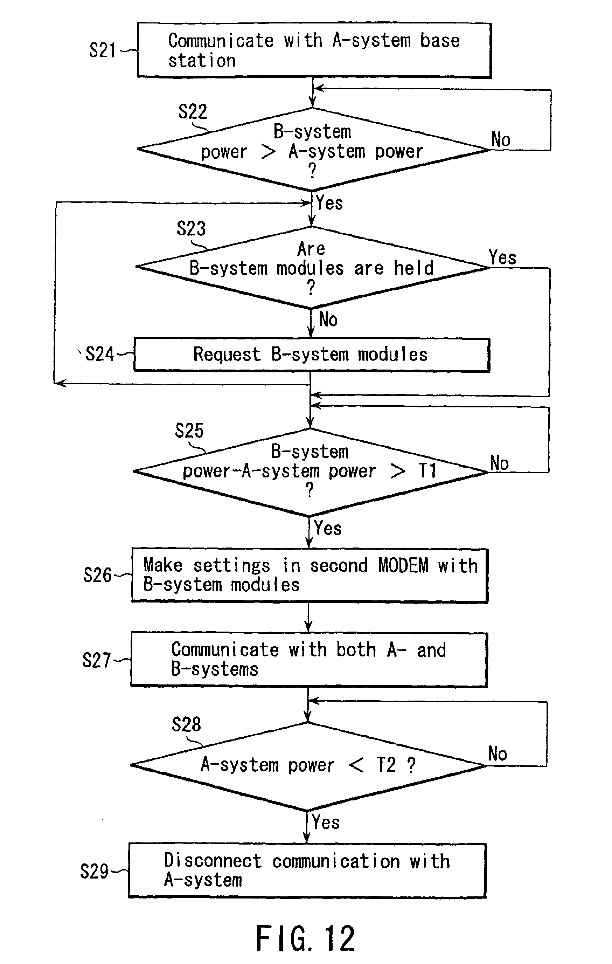

Assume that the software defined radio terminal 10 has moved into the overlapping service area OV the A- and B-systems during speech communication in the A-system (step S21 in FIG. 12).

At this time, the software defined radio terminal 10 receives the pilot channels from both the A- and B-systems. The software defined radio terminal 10 then measures the powers of the received pilot channels from the A- and B-systems (step S22 in FIG. 12). Assume that the software defined radio terminal 10 detects, upon measurement, that the power of the pilot channel from the B-system is higher.

Upon this detection, in the controller 12 of the software defined radio terminal 10, the handover manager 12d checks whether the system modules (program modules) required to start the B-system are held in the storage device 13 incorporated in the software defined radio terminal 10 (step S23 in FIG. 12). If it is determined that there is no shortage, the flow advances to the processing in step S25. If, however, no B-system modules are held in the software defined radio terminal 10 or there is a shortage of system modules, the handover manager 12d in the controller 12 of the software defined radio terminal 10 notifies the controller 12 of the corresponding information.

Upon reception of this notification, the controller 12 sends, to the base station of the B-system, a download request (transmission request) for the system modules required for operation in the B-system (step S24 in FIG. 12). That is, the controller 12 performs control to transmit the transmission request message of the corresponding information to the base station 20B of the B-system (t15 in FIG. 11).

With this operation, this transmission request is transmitted to the base station 20B through the wireless transmitter-receiver device 11 by radio.

At this time, the software defined radio terminal 10 notifies the base station 20B of the B-system of the system module information currently held in the storage device 13 incorporated in the local terminal (this request message indicates the information of the system modules currently held in the local storage device).

The base station 20B of the B-system refers to this notification information to compare the system modules held in the software defined radio terminal 10 with the system modules required to activate the B-system. The base station 20B then checks which system module is lacking. If there is a lacking system module, only the lacking system module is read out from the storage device 23 and transmitted to the software defined radio terminal 10 (t16 in FIG. 11).

The software defined radio terminal 10 receives the system module transmitted from the base station through the wireless transmitter-receiver device 11 and transfers it to the controller 12. The controller 12 performs control to hold the system module for the B-system in the storage device 13. As a consequence, all the system modules required for the B-system are stored in the storage device 13.

The handover manager 12d checks whether the system modules (program modules) required for operation in the B-system are held in the storage device 13 incorporated in the software defined radio terminal 10.

Since it is determined this time that the necessary system modules are held in the storage device 13, the handover manager 12d notifies the controller 12 of the corresponding information.

Upon reception of this notification, the controller 12 of the software defined radio terminal 10 measures the power values of the pilot channels from the A- and B-systems. The controller 12 then compares them (step S25 in FIG. 12).

If it is determined as a result that the difference between the power value of the pilot channel from the A-system and the power value of the pilot channel from the B-system is equal to or larger than a threshold T1, the controller 12 of the software defined radio terminal 10 notifies the handover manager 12d of the corresponding information. The handover manager 12d then notifies the controller 12 of the specific system nodules required for operation in the B-system.

In accordance with this notification, the controller 12 reads out the system modules for the B-system from the system modules held in the storage device 13, and makes settings in the signal processing device 14 with the system modules by using the function of the rewritable processor 12c (in this case, since the first MODEM 14a has already been used for the A-system, the system modules for the B-system are written in the second MODEM 14b of the program area which is now empty) (step S26 in FIG. 12).

With this operation, the signal processing device 14 can operate in the B-system and perform modulation/demodulation processing suitable for the B-system. As a result, the software defined radio terminal 10 becomes a terminal that can perform communication in both the A-system and the B-system.

When such a state is set, the controller 12 notifies the base station 20B of the B-system of the completion of preparations. (t17 in FIG. 11). The base station 20A of the A-system then notifies the mobile switching center MSC that the registered position of the software defined radio terminal 10 should be changed to allow the terminal to receive services from the B-system as well as those from the A-system (t18 in FIG. 11). Upon reception of this notification, the mobile switching center MSC changes the registered position of the software defined radio terminal 10.

The mobile switching center MSC then notifies the base station 20B of the B-system that the position of the software defined radio terminal 10 in the service area ARb of the B-system is registered (t19 in FIG. 11).

Upon reception of this notification, the base station 20B of the B-system allows communication services to be provided for the software defined radio terminal 10. As a consequence, the software defined radio terminal 10 can communicate with both the A- and B-systems, and becomes engaged in communication with the two systems (step S27 in FIG. 12; t20 in FIG. 11).

The software defined radio terminal 10 measures the powers of the received pilot channels from the A- and B-systems. The software defined radio terminal 10 then compares the measured power value of the pilot channel from the A-system with a threshold T2 (step S28 in FIG. 12). If the software defined radio terminal 10 detects that the power of the pilot channel from the A-system is equal to or less than the threshold T2, the controller 12 of the software defined radio terminal 10 notifies the handover manager 12d of the corresponding information. The handover manager 12d then sends, to the controller 12, an instruction to disconnect communication with the A-system so as to completely shift to the B-system. Upon reception of this instruction, the controller 12 performs control to disconnect the communication with the A-system (step S29 in FIG. 12).

As a result, a disconnection request is sent from the software defined radio terminal 10 to the base station 20A of the A-system (t21 in FIG. 11). Upon reception of this request, the base station 20A of the A-system changes the registered position of the software defined radio terminal 10 with respect to the mobile switching center MSC (t22 in FIG. 11). With this operation, information indicating that the software defined radio terminal 10 has moved out of the A-system is registered.

At this point of time, therefore, the software defined radio terminal 10 is disconnected from the base station 20A of the A-system and is completely engaged in communication with only the base station 20B of the B-system, thus completing handover.

When the base station 20B of the B-system takes over the communication with the software defined radio terminal 10 in place of the base station 20A of the A-system in this manner, handover of the software defined radio terminal 10 is automatically performed from communication through the base station 20A of the A-system to communication through the base station 20B of the B-system.

In summary, according to the second embodiment, in order to allow handover when a software defined radio terminal moves between service areas based on different communication schemes during communication, a signal processing device is used, which is a circuit that can be reconstructed by rewriting software such as an FPGA, PLD, or DSP. In addition, as this signal processing device, a device whose program area is divided into two areas (first MODEM 14a and second MODEM 14b) is used. In order to allow handover while a software defined radio terminal moves between service areas based on different communication schemes without disconnecting communication, the signal processing device is designed such that at least two MODEMs, namely the first MODEM 14a and second MODEM 14b, can be simultaneously operated.

The base station 20 of each system holds system modules that are necessary for the software defined radio terminal 10 to operate in the system, and has the function of transmitting such system modules in accordance with a request from the software defined radio terminal 10. In addition, each base station 20 has the function of detecting, when a system module transmission request is received from the software defined radio terminal 10, the difference between the system modules held in the software defined radio terminal 10 and the system modules required for the base station 20.

In addition, services based on different communication schemes are provided, and pilot channels are transmitted from the base stations 20 of the respective systems. The software defined radio terminal 10 has the measurement means for receiving the pilot channel transmitted from each base station and measuring the power (electric field strength) of the pilot channel. The measurement values are used for control on handover such that the connection is switched to a system exhibiting a better condition in accordance with the measurement values. The software defined radio terminal 10 has the storage device which can store/hold the system modules for each system so that necessary system modules are read out from this storage device 13 and used for settings in the signal processing device, as needed.

The software defined radio terminal 10 monitors the power of a pilot channel from each system by measuring its power. When, therefore, the software defined radio terminal 10 has moved to an overlapping area between the service areas of two systems based on different communication schemes and detects, as a result of measuring the power of a pilot channel from the preceding system and the power of a pilot channel from the new system, that the power of the pilot channel from the new system is higher, since it means that one of the conditions for handover is satisfied, the software defined radio terminal 10 checks first whether the system modules required to activate the new system are held in the storage device 13.

If the system modules required for operation in the new system with which communication can be performed are not held in the storage device 13, the controller 12 sends, to the base station 20 of the new system, a request to transmit the system modules required for operation in the new system. This request is sent through a request message. The request message from the software defined radio terminal 10 indicates the system modules currently held. Upon reception of this message, the base station 20 detects the difference (lack) between the system modules, and transmits only the module corresponding to the difference (lack) to the software defined radio terminal 10.

The software defined radio terminal 10 holds the system modules in the storage device 13.

The software defined radio terminal 10 monitors the difference between the power values of pilot channels from the old and new systems by measuring their powers. If the difference becomes equal to or larger than the predetermined threshold T1, the system modules for the new system are read out from the storage device 13, and settings are made in the signal processing device 14 with the read system modules.

In this case, the above system modules are written in an empty program area of the MODEM of the plurality of first MODEMS 14a and 14b in the signal processing device 14 to make settings to allow communication through the new system.

Therefore, by writing the system modules for the new system in the empty program area of the MODEM, settings are made to make the MODEM operate to allow communication based on the new system. Since the signal processing device 14 is still performing communication with the old system in this stage, in order to shift to communication based on the new system, the software defined radio terminal 10 notifies the old base station 20 of the corresponding information. The base station 20 of the A-system then notifies the mobile switching center MSC of the corresponding information. Upon reception of this notification, the mobile switching center MSC transmits information addressed to the software defined radio terminal 10 to not only the base station of the old system but also the base station of the new system.

With this operation, the software defined radio terminal 10 can simultaneously use both the old and new systems. The software defined radio terminal 10 then communicate with the only and new systems by using the two first MODEMS 14a and 14b in a ready state. If the power of a pilot channel from the old system becomes equal to or less than the threshold T2, the controller 12 sends a communication disconnection request to the old base station 20 to disconnect the communication with the base station 20 of the old system, and also notifies the mobile switching center MSC that the registered position of the software defined radio terminal 10 should be changed.

This operation allows handover when the software defined radio terminal enters the service area of a different communication scheme while moving during communication.

As is obvious from the above description, in this embodiment, handover can be performed while a software defined radio terminal is moving between the service areas based on different communication schemes and continuing communication. For this purpose, the software defined radio terminal 10 has the signal processing device 14 designed such that at least the two MODEMS, i.e., the first MODEMs 14a and 14b, can be simultaneously operated. In addition, the power of each of pilot channels from the respective systems based on different communication schemes can be measured, and the powers of pilot channels from these systems are measured and monitored.

According to this measurement, therefore, by writing, for example, in the program area of the first MODEM 14a, system modules for a radio communication system from which services are currently received, the first MODEM 14a is made to function as a MODEM for the radio communication system from which services are currently received. In addition, when the software defined radio terminal moves into the service area of another radio communication system, system modules for this radio communication system are written in the second MODEM 14b to make it function as a MODEM for the radio communication system. With this operation, communication connections through the two radio communication systems are simultaneously maintained. When the power of reception waves (e.g., pilot channel power (electric field strength)) from one of the two radio communication systems becomes equal to or less than a predetermined threshold, the communication channel from the radio communication system whose reception wave power has become equal to or less than the threshold is disconnected, and the communication connection using the remaining radio communication system can be maintained.

That is, when a software defined radio terminal moves into an overlapping service area between two radio communication systems during communication, and conditions for handover are satisfied, an environment that allows the terminal to conform to the new radio communication system is created, and communications through the new and old radio communication systems are activated. Thereafter, the communication connection using one of the radio communication systems which exhibits an electric field strength equal to or less than a threshold is disconnected, and the communication using the remaining radio communication system is maintained.

A system can therefore be obtained, which can smoothly perform handover between different types of radio communication systems and maintain mobile communication across the different types of radio communication systems.

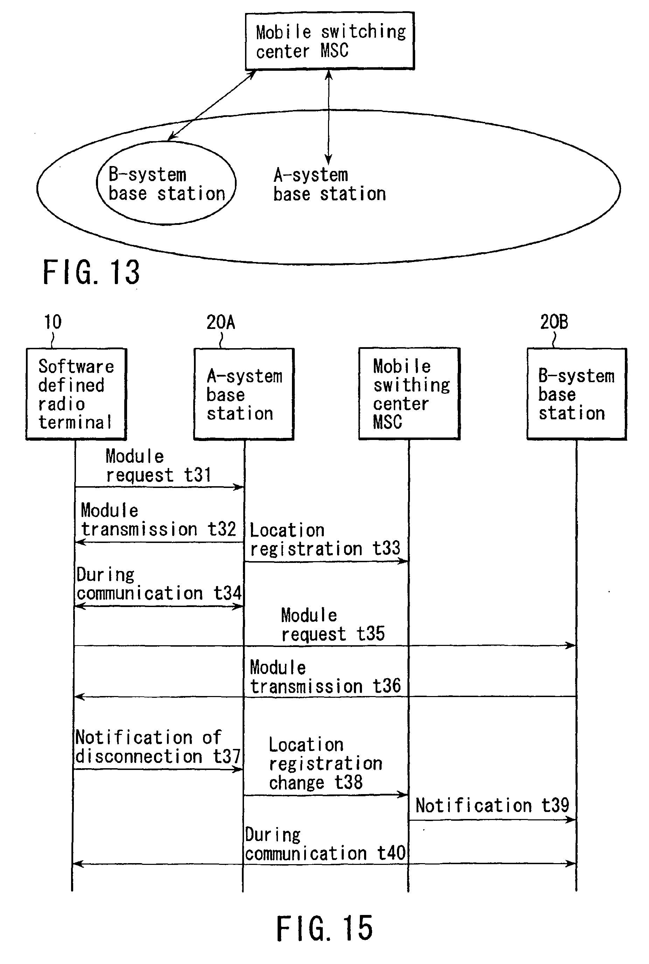

Assume that a given radio communication system has a cell configuration in which the service area of the B-system exists in part of the service area of the A-system, as shown in FIG. 13, and the data transmission rate in the B-system is higher than that in the A-system. In this case, when the software defined radio terminal 10 enters the service area of the B-system, handover may be performed from the A-system to the B-system following the same procedure as described above.

This makes it possible to perform handover to a system with a high-speed channel during communication on the move when such a system that allows communication at a speed higher than the current speed can be used. That is, the software defined radio terminal 10 capable of high-speed, comfortable communication can be obtained.

The above description has been made on the radio communication system including the software defined radio terminal according to the present invention, which allows handover during communication while the software defined radio terminal is moving between the service areas based on different communication schemes. A handover technique that allows the use of a transmission rate corresponding to the resources of a terminal at the time of handover will be described next as the third embodiment.

### (Third Embodiment)

### <Determination of Transmission Rate Corresponding to Resources of Terminal at Handover Time>

It basically suffices if the apparatus configuration of this embodiment is the same as that of the first and second embodiments. However, a handover manager 12d is made to have a function of detecting a resource shortage and a transmission condition adjusting function of making adjustments with a base station 20 of a radio communication system that is currently set in a communicable state so as to reduce the resources upon detection of a resource shortage. The base station 20 is made to have a function of making adjustments to allow a software defined radio terminal 10 to transmit information under the transmission conditions required through this communication. In this case, to adjust the transmission conditions is, for example, to make a setting to decrease the transmission rate if the resources used by the terminal can be reduced by decreasing the transmission rate.

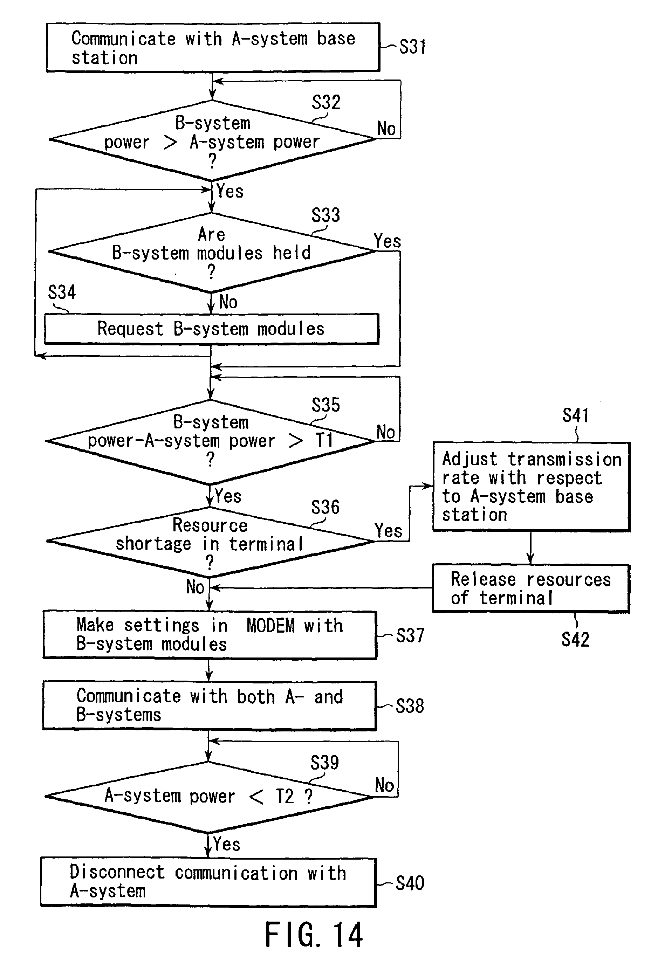

FIG. 14 shows the operation flow of the software defined radio terminal 10 in this embodiment, which has the function of adjusting the transmission rate in accordance with the resources of the terminal.

The contents of the processing performed by the software defined radio terminal 10 will be described with reference to FIG. 14.

Assume that the software defined radio terminal 10 is communication at a transmission rate R in the A-system (step S31 in FIG. 14). Assume also that the software defined radio terminal 10 has moved from a service area ARa of the A-system to a service area ARb of the B-system during communication.

The software defined radio terminal 10 receives pilot channels from base stations 10A and 10B that take charge of these service areas ARa and ARb. A controller 12 of the software defined radio terminal 10 knows from these pilot channels that the terminal can receive communication services in the A-system.

The software defined radio terminal 10 also measures the powers of the received pilot channels from both the A- and B-systems (step S32 in FIG. 14). Assume that the software defined radio terminal 10 detects as a result of measurement that the power of the pilot channel from the B-system is higher. The handover manager 12d of the software defined radio terminal 10 then checks whether the system modules (program modules) required for operation in the B-system are held in a storage device 13 incorporated in the software defined radio terminal 10 (step S33 in FIG. 14).

If it is determined that no B system modules are present in the software defined radio terminal 10 or there is a shortage of system modules, the handover manager 12d in the controller 12 of the software defined radio terminal 10 notifies the controller 12 of the corresponding information.

Upon reception of this notification, the controller 12 sends, to the base station 10B of the B-system, a download request (transmission request) for the system modules required for operation in the B-system (step S34 in FIG. 14). That is, the controller 12 performs control to transmit a transmission request message indicating the corresponding information to the base station 20B of the B-system.

With this operation, this transmission request is transmitted to the base station 20B by radio through a wireless transmitter-receiver device 11.

At this time, the software defined radio terminal 10 notifies the B-system base station 20B of the system module information currently held in the storage device 13 incorporated in the terminal itself (the request message indicates the information of the system modules currently held in the terminal itself).

The base station 20B of the B-system refers to this notification information to compare the system modules held in the software defined radio terminal 10 with the system modules required to activate the B-system. The base station 20B then checks which system module is lacking. If there is a lacking system module, only the lacking system module is read out from a storage device 23 and transmitted to the software defined radio terminal 10.

The software defined radio terminal 10 receives the system module transmitted from the base station through the wireless transmitter-receiver device 11 and transfers it to the controller 12. The controller 12 performs control to hold the system module for the B-system in the storage device 13. As a consequence, all the system modules required for the B-system are stored in the storage device 13.

When this operation is completed, the controller 12 of the software defined radio terminal 10 checks whether the difference between the power of a pilot channel from the B-system and the power of a pilot channel from the A-system is larger than a threshold T1 (step S35 in FIG. 14). If it is determined that the difference is larger than the threshold, the controller 12 checks whether there is a resource shortage in the software defined radio terminal 10 (step S36 in FIG. 14). If it is determined that a resource for the B-system is lacking, an adjustment is made. More specifically, if, for example, the resources for the A-system which are used by the terminal can be reduced by decreasing the transmission rate, the transmission rate is decreased. In this case, the transmission rate with respect to the base station 20A of the A-system is adjusted (step S41 in FIG. 14). This makes it possible to allocate the released resource of the software defined radio terminal 10 for the A-system as a resource for activating the B-system.

When a resource shortage is eliminated by adjusting the transmission rate, the corresponding resource is released in the terminal 10 (step S42 in FIG. 14). With this operation, when a resource shortage may occur in using system modules for a plurality of different systems at the time of handover, a transmission rate corresponding to the resources of the terminal at the time of handover can be used. This eliminates the resource shortage.

With this operation, necessary resources can be ensured, the handover manager 12d notifies the controller 12 of the corresponding information.

Upon reception of this notification, a rewritable processor 12c in the controller 12 of the software defined radio terminal 10 reads out the system modules for the B-system from the system modules held in the storage device 13, and makes settings in a signal processing device 14 (step S37 in FIG. 14).

With this operation, the signal processing device 14 can operate in the B-system and perform modulation/demodulation processing suitable for the B-system, thereby allowing the software defined radio terminal 10 to perform communication in the A- and B-systems.

When this state is established, the controller 12 notifies the base station 20B of the B-system of the completion of preparations. The base station 20A of the A-system notifies the mobile switching center MSC that the registered position of the software defined radio terminal 10 should be changed to allow the reception of services from both the A- and B-systems. Upon reception of this notification, the mobile switching center MSC changes the registered position of the software defined radio terminal 10.

The mobile switching center MSC then notifies the B-system base station 20B that the position of the software defined radio terminal 10 in the service area ARb of the B-system is registered.

Upon reception of this notification, the B-system base station 20B enables communication services for the software defined radio terminal 10. The software defined radio terminal 10 can therefore communicate with both the A- and B-systems and becomes engaged in communication with the two systems (step S38 in FIG. 14).

The software defined radio terminal 10 measures the powers of pilot channels from the A- and B-systems, and compares the measured power value of the pilot channel from the A-system with a threshold T2 (step S39 in FIG. 14). If the software defined radio terminal 10 detects as a result of comparison that the power of the pilot channel from the A-system is equal to or less than the threshold T2, the controller 12 of the software defined radio terminal 10 notifies the handover manager 12d of the corresponding information. The handover manager 12d instructs the controller 12 to disconnect the communication with the A-system so as to completely shift to the B-system. Upon reception of this instruction, the controller 12 performs control to disconnect the communication with the A-system (step S40 in FIG. 14).

As a result, a disconnection request is sent from the software defined radio terminal 10 to the base station 20A of the A-system. Upon reception of this request, the base station 20A of the A-system causes the mobile switching center MSC to change the registered position of the software defined radio terminal 10. With this operation, information indicating that the software defined radio terminal 10 has moved out of the A-system is registered.

At this point of time, therefore, the software defined radio terminal 10 is disconnected from the base station 20A of the A-system, and performs communication with the base station 20B of the B-system alone completely, thus completing handover.

At this time, since a resource margin is restored, a change procedure is executed with respect to the base station of the B-system in this stage to restore the transmission rate, which has been decreased to r (< R) at the start of handover, to the initial rate R. Such operation can be performed for the following reason. Since the resources for the A-system become unnecessary, the resources occupied for the A-system are changed to those for the B-system, thereby ensuring resources large enough for operation in the B-system.

As described above, in executing handover, if a resource shortage occurs, necessary resources are ensured by, for example, decreasing the transmission rate to be used. This makes it possible to perform smooth handover from the A-system to the B-system. After a complete shift to the B-system, the resources that have been used for the A-system can be used for the B-system, and hence the transmission rate, which has been decreased to compensate for the resource shortage, can be restored to the initial rate. Therefore, a change procedure is executed to restore the transmission rate to the initial rate to allow the terminal to perform communication at the normal transmission rate upon completion of the handover.

As described above, in using system modules for a plurality of different systems at the time of handover, if a resource shortage may occur, for example, a transmission rate corresponding to the resources of the terminal at the time of handover can be used. By changing the transmission rate to be used, releasable resources are released to restore a resource margin, thus eliminating the resource shortage. This makes it possible to perform handover between radio communication systems based on different schemes during speech communication even if there is no resource margin at the time of handover.

The above description has been made on the handover technique of performing smooth handover by using a transmission rate corresponding to the resources of a terminal at the time of handover. Another example of enabling handover during communication while a terminal is moving between the service areas based on different communication schemes will be described next as the fourth embodiment associated with a radio communication system including a software defined radio terminal according to the present invention.

### (Fourth Embodiment)

### <Second Handover Technique during Communication>

This embodiment is associated with a scheme of disconnecting communication based on a given system used before handover when preparations for handover are completed in executing handover during communication.

It basically suffices if a software defined radio terminal 10 used in this embodiment has the same arrangement as that of the first and second embodiments. That is, the software defined radio terminal 10 is comprised of a wireless transmitter-receiver device 11, controller 12, storage device 13, and signal processing device 14. The signal processing device 14 is a circuit that can be reconstructed by rewriting software such as an FPGA, PLD, or DSP. A base station of each system holds system modules required for a software defined radio terminal to operated in this system, and has a function of transmitting such system modules in response to a request from the software defined radio terminal 10.

In addition, each base station 20 of each system has a function of detecting the difference between the system modules held in the software defined radio terminal 10 with the system modules required for base station 20 when a system module transmission request is sent from the software defined radio terminal 10.

Assume that there are A- and B-systems based on different communication schemes, and there is an overlapping portion OV where service areas ARa and ARb of the A- and B-systems overlap each other. Pilot channels are transmitted from base stations 20A and 20B of the A- and B-systems. The software defined radio terminal 10 has a means for receiving the pilot channels transmitted from the respective base stations 20A and 20B and measuring the electric field strengths of the channels.

Downloaded system modules can be stored/held in the storage device 13. The held system modules are read out to make settings in the signal processing device 14 to allow the terminal to perform communication in the radio communication system supported by the modules.

Assume that the software defined radio terminal 10 is located in an area covered by only the A-system. When the software defined radio terminal 10 is turned on in this state, the controller 12 checks whether the system modules required for operation in the A-system are held in the storage device 13. If it is determined that such system modules are held, the controller 12 reads out the system modules for the A-system from the storage device 13 and makes settings in the signal processing device 14 with the read system modules.

More specifically, if the software defined radio terminal 10 is located in a service area, of the service area ARa of the A-system, which is covered by only the A-system, and the user turns on the software defined radio terminal 10 in this state, the software defined radio terminal 10 receives a pilot channel from the base station 20A that takes charge of the service area ARa. The controller 12 of the software defined radio terminal 10 then knows from this pilot channel that communication services in the A-system can be received now.

A handover manager 12d of the software defined radio terminal 10 then checks whether the system modules (program modules) required for operation in the A-system are held in the storage device 13 incorporated in the software defined radio terminal 10. As described above, assume that the software defined radio terminal 10 knows a set of system modules required for each system in advance or can know them through a notification channel from each base station.

If it is determined that the necessary system modules are held in the storage device 13 of the software defined radio terminal 10, the controller 12 reads out the system modules required for the A-system from the storage device 13, and makes settings in the signal processing device 14 with the system modules by using the function of a rewritable processor 12c.

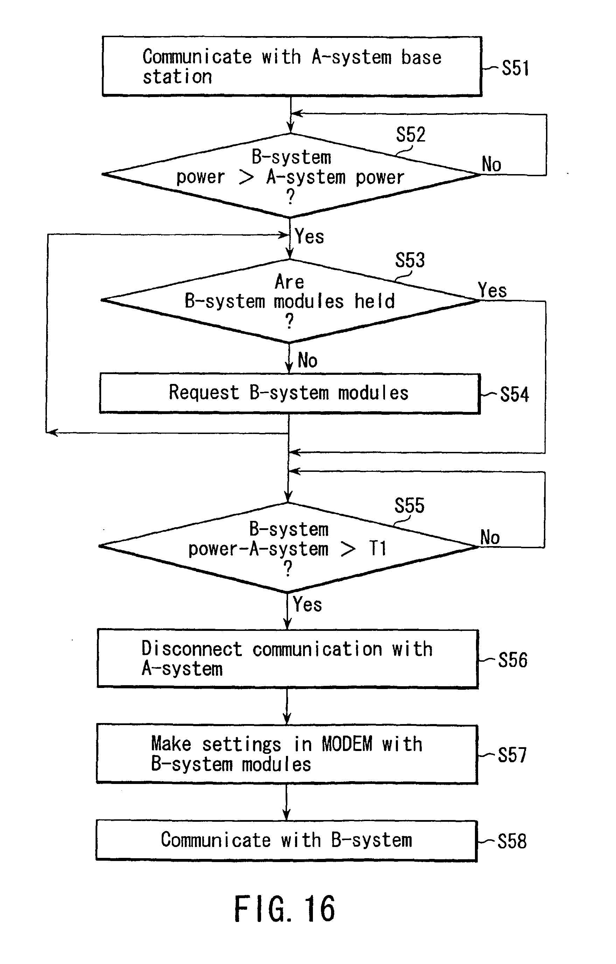

If the handover manager 12d detects a lack of a necessary system module, i.e., there is a shortage of program modules held in the storage device 13 or no program module is held, the handover manager 12d notifies the controller 12 of the corresponding information. Upon reception of this notification, the controller 12 sends, to the base station of the A-system, a request to transmit the system modules required for operation in the A-system. That is, the controller 12 performs control to transmit such a transmission request message to the base station 20A (t31 in FIG. 15). With this operation, this transmission request is transmitted to the base station 20A through the wireless transmitter-receiver device 11 by radio.

The request message from the software defined radio terminal 10 indicates information about the system modules currently held in the local radio terminal. Therefore, a lacking module can be identified by detecting the difference between the contents of the information of the transmission request message and all the modules required for operation in the A-system. Upon reception of this transmission request message, therefore, the base station 20A detects the difference between the currently held modules and all the modules required for operation in the A-system, identifies the module corresponding to the difference (lacking module), reads out the module corresponding to the difference from a storage device 23, and transmits it to the software defined radio terminal 10 (t32 in FIG. 15).

The software defined radio terminal 10 receives this module through the wireless transmitter-receiver device 11 and sends it to the controller 12. The controller 12 then performs control to store the system module for the A-system in the storage device 13. As a consequence, all the system modules required for the A-system are stored in the storage device 13.

The handover manager 12d checks whether the system modules (program modules) required for operation in the A-system are held in the storage device 13 incorporated in the software defined radio terminal 10.

As a result, since the necessary system modules are held in the storage device 13 this time, the handover manager 12d notifies the controller 12 of the corresponding information.

Upon reception of this notification, the controller 12 reads out the system modules for the A-system from the storage device 13. The controller 12 then writes the above system modules in, for example, the program area of the first MODEM 14a of the signal processing device 14 by using the function of the rewritable processor 12c, thereby making settings that allow communication based on the A-system.

With this operation, the signal processing device 14 can perform modulation/demodulation processing suitable for the A-system, and the software defined radio terminal 10 becomes a terminal that can perform communication in the A-system. When this state is established, the controller 12 notifies the base station 20A of the A-system of the completion of preparations.

Upon reception of this notification, the base station 20A of the A-system registers the position of the software defined radio terminal 10 with respect to the mobile switching center MSC (t33 in FIG. 15).

The base station 20A of the A-system is then set in a standby state with respect to the software defined radio terminal 10.

In this case, if the software defined radio terminal 10 receives an incoming call, the software defined radio terminal 10 can perform communication in the A-system by performing responding operation (t12 in FIG. 15).

Assume that in this state (the software defined radio terminal 10 can operate as a terminal for the A-system by making settings in the signal processing device 14 by using the system modules for the A-system, and is communicating with a base station of the A-system) (step S51 in FIG. 16), the software defined radio terminal 10 has moved into the overlapping service area OV between the A- and B-systems.

At this time, the software defined radio terminal 10 receives pilot channels from both the A- and B-systems. The software defined radio terminal 10 then measures the powers of the received pilot channels from the A- and B-systems (step S52 in FIG. 16). Assume that the software defined radio terminal 10 detects, upon measurement, that the power of the pilot channel from the B-system is higher.

Upon this detection, in the controller 12 of the software defined radio terminal 10, the handover manager 12d checks whether the system modules (program modules) required to start the B-system are held in the storage device 13 incorporated in the software defined radio terminal 10 (step S53 in FIG. 16). If it is determined that there is no shortage, the flow advances to the processing in step S55. If, however, no B-system modules are held in the software defined radio terminal 10 or there is a shortage of system modules, the handover manager 12d in the controller 12 of the software defined radio terminal 10 notifies the controller 12 of the corresponding information.

Upon reception of this notification, the controller 12 sends, to the base station of the B-system, a download request (transmission request) for the system modules required for operation in the B-system (step S54 in FIG. 16). That is, the controller 12 performs control to transmit the transmission request message of the corresponding information to the base station 20B of the B-system. With this operation, this transmission request is transmitted to the base station 20B through the wireless transmitter-receiver device 11 by radio (t35 in FIG. 15).

At this time, the software defined radio terminal 10 notifies the base station 20B of the B-system of the system module information currently held in the storage device 13 incorporated in the local terminal (this request message indicates the information of the system modules currently held in the local storage device).

The base station 20B of the B-system refers to this notification information to compare the system modules held in the software defined radio terminal 10 with the system modules required to activate the B-system. The base station 20B then checks which system module is lacking. If there is a lacking system module, only the lacking system module is read out from the storage device 23 and transmitted to the software defined radio terminal 10 (t36 in FIG. 15).

The software defined radio terminal 10 receives the system module transmitted from the base station through the wireless transmitter-receiver device 11 and transfers it to the controller 12. The controller 12 performs control to hold the system module for the B-system in the storage device 13. As a consequence, all the system modules required for the B-system are stored in the storage device 13.

The handover manager 12d checks whether the system modules (program modules) required for operation in the B-system are held in the storage device 13 incorporated in the software defined radio terminal 10.

Since it is determined this time that the necessary system modules are held in the storage device 13, the handover manager 12d notifies the controller 12 of the corresponding information.

Upon reception of this notification, the controller 12 of the software defined radio terminal 10 measures the power values of the pilot channels from the A- and B-systems. The controller 12 then compares them (step S55 in FIG. 16).

If it is determined as a result that the difference between the power value of the pilot channel from the A-system and the power value of the pilot channel from the B-system is equal to or larger than a threshold T1, the controller 12 of the software defined radio terminal 10 notifies the handover manager 12d of the corresponding information. The handover manager 12d then instructs the controller 12 to disconnect the communication with the A-system. Upon reception of this instruction, the controller 12 performs control to disconnect the communication with the A-system so as to perform handover to the B-system (step S56 in FIG. 16; t37 in FIG. 15).

At the same time, the handover manager 12d notifies the controller 12 of the specific system nodules required for operation in the B-system.

In accordance with this notification, the controller 12 reads out the system modules for the B-system from the system modules held in the storage device 13, and makes settings in the signal processing device 14 with the system modules by using the function of the rewritable processor 12c (step S57 in FIG. 16).

As a result of performing control to disconnect the communication with the A-system, a disconnection request is sent from the software defined radio terminal 10 to the base station 20A of the A-system. Upon reception of this request, the base station 20A of the A-system notifies the mobile switching center MSC that the registered position of the software defined radio terminal 10 in the area of the A-system is changed to that in the area of the B-system (t38 in FIG. 15). With this operation, the mobile switching center MSC registers information indicating that the software defined radio terminal 10 has moved from the A-system to the B-system, and notifies the base station 20B of the B-system of the corresponding information (t39 in FIG. 15).

As a consequence, the base station 20B of the B-system takes over communication with the software defined radio terminal 10 from the base station 20A of the A-system, and the software defined radio terminal 10, which can perform modulation/demodulation processing suitable for the B-system by using the signal processing device 14 which can operate in the B-system upon setting of the system modules for the B-system, performs communication in the B-system instead of the A-system (step S58 in FIG. 16; t40 in FIG. 15).

As described above, there are provided a software defined radio terminal and radio communication system, in which in moving between the service areas of radio communication systems based on different schemes, after the system modules required for the destination radio communication system are prepared, the communication with the radio communication system that has been used is disconnected, and the settings in the MODEM are changed by using the system modules for the destination radio communication system, thereby performing communication. According to the software defined radio terminal and radio communication system, if the processing time required to change the settings in the MODEM by using the system modules for the destination radio communication system and resume communication falls within an allowable time for handover, a shift from the A-system to the B-system can be satisfactorily handled, and communication can be maintained without any interruption, thus allowing handover between the radio communication systems of the different schemes with the necessary minimum resource configuration without preparing resources wastefully.

In this embodiment, when the software defined radio terminal 10 moves into the service area of the C-system, the terminal downloads the system modules for the C-system by similar processing, and resets the signal processing device 14 to perform handover.

Consider a cell configuration in which the service area of the B-system exists in part of the service area of the A-system, as shown in FIG. 13, and the data transmission rate in the B-system is higher than that in the A-system. In this case, when the software defined radio terminal 10 enters the service area of the B-system, handover may be performed from the A-system to the B-system following the same procedure as described above. This makes it possible to perform communication at a higher speed.

The above embodiments have exemplified the case where there is an overlapping portion between the service area of the A-system and the service area of the B-system. If, however, there is no overlapping portion between the service area of the A-system and the service area of the B-system, the software defined radio terminal 10 disconnects communication when it moves out of the service area of the A-system, and starts connection when it enters the service area of the B-system.

Note that the present invention is not limited to the above embodiments, and can be variously modified. In the present invention, the embodiments include inventions of various stages, and various inventions can be extracted by proper combinations of a plurality of disclosed constituent elements. When, for example, at least one of the problems described in "BACKGROUND OF THE INVENTION" can be solved and at least one of the effects described in "BRIEF SUMMARY OF THE INVENTION" can be obtained even if several constituent elements are omitted from the all the constituent elements in each embodiment, the arrangement from which these constituent elements are omitted can be extracted as an invention.

## Claims

1. A radio apparatus which can be applied to a cellular mobile communication system in which service areas of a plurality of radio communication systems based on different communication schemes at least overlap each other, and which performs wireless communications with base stations of cells, said radio apparatus being software-defined and comprising:
a wireless transmitter/receiver device (11) configured to receive pilot signals transmitted by the base stations and including identification information regarding radio communication systems which use a format common to radio communication systems and which are compatible with the base stations, said wireless transmitter/receiver device being also configured to transmit/receive a radio signal with reference to the base stations;
a storage device (13) configured to store a plurality of system modules obtained by converting signal processing functions for transmission/reception based on a radio communication system into software modules;
a signal processing resource (14) configured to process a signal transmitted/received through said wireless transmitter-receiver device, temporarily hold a system module corresponding to a specific radio communication system which is allocated thereto by being read out from said storage device, and execute signal processing corresponding to the held system module; and
a controller (12) comprising a handover manager configured to perform management control so as to allocate a system module, which corresponds to a radio communication system to be used and which is one of the system modules stored in said storage device, to said signal processing resource, said handover manager being also configured to perform management control in an overlapping service area between a plurality of types of radio communication systems so as to allocate system modules, which correspond to said plurality of types of radio communication systems, to said signal processing resource on the basis of the identification information which is included in the pilot signal and which is related to the radio communication systems.

2. A radio apparatus according to Claim 1, **characterized in that** said controller includes module rewriting processing means which is adapted to read out, from said storage device, a system module corresponding to a function to be executed in accordance with the currently used radio communication system and under the control of said handover manager, and to give the system module to the signal processing resource.

3. A radio apparatus according to Claim 1, **characterized in that** said controller comprises a function of generating a request to disconnect communication with a radio communication system which has been engaged in communication before handover, when a handover condition is satisfied.

4. A handover control method which can be applied to a cellular mobile communication system in which service areas of a plurality of radio communication systems for software-defined radio terminals based on different communication schemes at least overlap each other, and which controls wireless communications , performed with base stations of cells, said method comprising:
a step of receiving pilot signals transmitted by the base stations and including identification information regarding radio communication systems which use a format common to radio communication systems and which are compatible with the base stations;
a step of storing a plurality of system modules obtained by converting signal processing functions for transmission/reception based on a radio communication system into software modules;
a step of temporarily holding a system module corresponding to a specific radio communication system which is allocated thereto by being read out from said storage device, and executing signal processing corresponding to the held system module; and
a step of performing management control so as to allocate a system module, which corresponds to a radio communication system to be used and which is one of the system modules stored in said storage device, to said signal processing resource, and performing management control in an overlapping service area between a plurality of types of radio communication systems so as to allocate system modules, which correspond to said plurality of types of radio communication systems, to said signal processing resource on the basis of the identification information which is included in the pilot signal and which is related to the radio communication systems.

5. A handover control method according to Claim 4, **characterised in that** a request to disconnect communication with a radio communication system which has been engaged in communication before handover is made when a handover condition is satisfied.

6. A handover control method according to Claim 4, **characterised in that** when a handover is started, transmission speed used for communication is reduced in the event that there is a resource shortage at the relevant base station, and, at the end of the handover, the transmission speed is returned to the original speed.

## Patentansprüche

1. Funkgerät, das auf ein Mobilfunkkommunikationssystem angewendet werden kann, in dem sich Bedienungsbereiche mehrerer Funkkommunikationssysteme, die auf unterschiedlichen Kommunikationsregimes basieren, wenigstens überlappen, und das eine drahtlose Kommunikation mit Basisstationen von Zellen ausführt, wobei das Funkgerät softwaredefiniert ist und Folgendes umfasst:
eine Drahtlos-Sender-Empfänger-Vorrichtung (11), die dafür konfiguriert ist, Pilotsignale zu empfangen, die durch die Basisstationen gesendet werden und die Identifikationsinformationen bezüglich Funkkommunikationssystemen enthalten, die ein Format verwenden, das Funkkommunikationssystemen gemein ist, und die mit den Basisstationen kompatibel sind, wobei die Drahtlos-Sender-Empfänger-Vorrichtung außerdem dafür konfiguriert ist, ein Funksignal bezüglich der Basisstationen zu senden bzw. zu empfangen;
eine Speichervorrichtung (13), die dafür konfiguriert ist, mehrere Systemmodule zu speichern, die durch Umwandeln von Signalverarbeitungsfunktionen zum Senden bzw. Empfangen auf der Basis eines Funkkommunikationssystems in Softwaremodule erhalten werden;
Signalverarbeitungsressource (14), die dafür konfiguriert ist: ein Signal, das durch die Drahtlos-Sender-Empfänger-Vorrichtung empfangen wurde, zu verarbeiten; ein Systemmodul, das einem bestimmten Funkkommunikationssystem entspricht, das diesem zugeordnet ist, durch Auslesen aus der Speichervorrichtung vorübergehend zu speichern; und eine Signalverarbeitung entsprechend dem gespeicherten Systemmodul auszuführen; und
eine Steuerung (12), die eine Verbindungsübergabeverwaltungsvorrichtung umfasst, die dafür konfiguriert ist, eine Verwaltungssteuerung dergestalt durchzuführen, dass ein Systemmodul, das einem zu benutzenden Funkkommunikationssystem entspricht und das eines der Systemmodule ist, die in der Speichervorrichtung gespeichert sind, der Signalverarbeitungsressource zugewiesen wird, wobei die Verbindungsübergabeverwaltungsvorrichtung des Weiteren dafür konfiguriert ist, eine Verwaltungssteuerung in einem überlappenden Bedienungsbereich zwischen mehreren Funkkommunikationssystemtypen dergestalt durchzuführen, dass Systemmodule, die den mehreren Funkkommunikationssystemtypen entsprechen, der Signalverarbeitungsressource auf der Grundlage der Identifikationsinformationen zugewiesen werden, die in dem Pilotsignal enthalten sind und die den Funkkommunikationssystemen zugehörig sind.

2. Funkgerät nach Anspruch 1, **dadurch gekennzeichnet, dass** die Steuerung ein Modulüberschreibverarbeitungsmittel enthält, das dafür geeignet ist, aus der Speichervorrichtung ein Systemmodul auszulesen, das einer Funktion entspricht, die gemäß dem momentan benutzten Funkkommunikationssystem und unter der Kontrolle der Verbindungsübergabeverwaltungsvorrichtung auszuführen ist, und das Systemmodul an die Signalverarbeitungsressource zu übergeben.

3. Funkgerät nach Anspruch 1, **dadurch gekennzeichnet, dass** die Steuerung eine Funktion des Erzeugens einer Anforderung zum Trennen der Kommunikation mit einem Funkkommunikationssystem umfasst, das vor der Verbindungsübergabe in eine Kommunikation eingebunden war, wenn eine Verbindungsübergabebedingung erfüllt ist.

4. Verbindungsübergabesteuerungsverfahren, das auf ein Mobilfunkkommunikationssystem angewendet werden kann, in dem sich Bedienungsbereiche mehrerer Funkkommunikationssysteme für softwaredefinierte Funk-Endgeräte, die auf unterschiedlichen Kommunikationsregimes basieren, wenigstens überlappen, und das eine drahtlose Kommunikation mit Basisstationen von Zellen steuert, wobei das Verfahren Folgendes umfasst:
einen Schritt des Empfangens von Pilotsignalen, die durch die Basisstationen gesendet werden und Identifikationsinformationen bezüglich Funkkommunikationssystemen enthalten, die ein Format verwenden, das Funkkommunikationssystemen gemein ist, und die mit den Basisstationen kompatibel sind;
einen Schritt des Speicherns mehrerer Systemmodule, die durch Umwandeln von Signalverarbeitungsfunktionen zum Senden bzw. Empfangen auf der Basis eines Funkkommunikationssystems in Softwaremodule erhalten werden;
einen Schritt des vorübergehenden Speicherns eines Systemmoduls, das einem bestimmten Funkkommunikationssystem entspricht, das diesem zugeordnet ist, durch Auslesen aus der Speichervorrichtung, und des Ausführend einer Signalverarbeitung entsprechend dem gespeicherten Systemmodul; und
einen Schritt des Durchführens einer Verwaltungssteuerung dergestalt, dass ein Systemmodul, das einem zu benutzenden Funkkommunikationssystem entspricht und das eines der Systemmodule ist, die in der Speichervorrichtung gespeichert sind, der Signalverarbeitungsressource zugewiesen wird, und des Durchführens einer Verwaltungssteuerung in einem überlappenden Bedienungsbereich zwischen mehreren Funkkommunikationssystemtypen dergestalt, dass Systemmodule, die den mehreren Funkkommunikationssystemtypen entsprechen, der Signalverarbeitungsressource auf der Grundlage der Identifikationsinformationen zugewiesen werden, die in dem Pilotsignal enthalten sind und die den Funkkommunikationssystemen zugehörig sind.

5. Verbindungsübergabesteuerungsverfahren nach Anspruch 4, **dadurch gekennzeichnet, dass** eine Anforderung zum Trennen der Kommunikation mit einem Funkkommunikationssystem, das vor der Verbindungsübergabe in eine Kommunikation eingebunden war, ergeht, wenn eine Verbindungsübergabebedingung erfüllt ist.

6. Verbindungsübergabesteuerungsverfahren nach Anspruch 4, **dadurch gekennzeichnet, dass** bei Beginn einer Verbindungsübergabe die für die Kommunikation benutzte Übertragungsgeschwindigkeit verringert wird, wenn eine Ressourcenknappheit in der betreffenden Basisstation besteht, und am Ende der Verbindungsübergabe die Übertragungsgeschwindigkeit auf die ursprüngliche Geschwindigkeit zurückgeführt wird.

## Revendications

1. Appareil radio qui peut être appliqué à un système de communication mobile cellulaire dans lequel des zones de service d'une pluralité de systèmes de communication radio qui sont basés sur différents schémas de communication au moins se chevauchent les uns les autres, et qui réalise des communications sans fil avec des stations de base de cellules, ledit appareil radio étant défini par logiciel et comprenant :
un dispositif d'émetteur/récepteur sans fil (11) qui est configuré pour recevoir des signaux de pilote qui sont transmis par les stations de base et incluant une information d'identification concernant des systèmes de communication radio qui utilisent un format qui est commun vis-à-vis de systèmes de communications radio et qui sont compatibles avec les stations de base, ledit dispositif d'émetteur/récepteur sans fil étant également configuré pour émettre/recevoir un signal radio par référence aux stations de base ;
un dispositif de stockage (13) qui est configuré pour stocker une pluralité de modules de système qui sont obtenus en convertissant des fonctions de traitement de signal pour l'émission/la réception sur la base d'un système de communication radio selon des modules de logiciel ;
une ressource de traitement de signal (14) qui est configurée pour traiter un signal émis/reçu par l'intermédiaire dudit dispositif d'émetteur/récepteur sans fil, pour bloquer de façon temporaire un module de système correspondant à un système de communication radio spécifique qui lui est déjà alloué au moyen d'une lecture à partir dudit dispositif de stockage et pour exécuter un traitement de signal correspondant au module de système bloqué ; et
un contrôleur (12) qui comprend un gestionnaire de transfert qui est configuré pour réaliser une commande de gestion de manière à allouer un module de système, qui correspond à un système de communication radio à utiliser et qui est l'un des modules système qui sont stockés dans ledit dispositif de stockage, à ladite ressource de traitement de signal, ledit gestionnaire de transfert étant également configuré pour réaliser une commande de gestion dans une zone de service en chevauchement entre une pluralité de types de systèmes de communication radio de manière à allouer des modules de système, qui correspondent à ladite pluralité de types de systèmes de communication radio, à ladite ressource de traitement de signal sur la base de l'information d'identification qui est incluse dans le signal de pilote et qui est rapportée aux systèmes de communication radio.

2. Appareil radio selon la revendication 1, **caractérisé en ce que** ledit contrôleur inclut un moyen de traitement de réécriture de module qui est adapté pour lire, à partir dudit dispositif de stockage, un module de système correspondant à une fonction destinée à être exécutée conformément au système de communication radio présentement utilisé et sous la commande dudit gestionnaire de transfert et pour donner le module de système à la ressource de traitement de signal.

3. Appareil radio selon la revendication 1, **caractérisé en ce que** ledit contrôleur comprend une fonction de génération d'une requête pour déconnecter une communication avec un système de communication radio qui a été engagé dans la communication avant transfert, lorsqu'une condition de transfert est satisfaite.

4. Procédé de commande de transfert qui peut être appliqué à un système de communication mobile cellulaire dans lequel des zones de service d'une pluralité de systèmes de communication radio pour des terminaux radio définis par logiciel sur la base de différents schémas de communication au moins se chevauchent les uns les autres, et qui commande des communications sans fil qui sont réalisées avec des stations de base de cellules, ledit procédé comprenant :
une étape de réception de signaux de pilote qui sont transmis par les stations de base et incluant une information d'identification concernant des systèmes de communication radio qui utilisent un format qui est commun vis-à-vis de systèmes de communication radio et qui sont compatibles avec les stations de base ;
une étape de stockage d'une pluralité de modules de système qui sont obtenus en convertissant des fonctions de traitement de signal pour une émission/réception sur la base d'un système de communication radio selon des modules de logiciel ;
une étape de blocage temporaire d'un module de système correspondant à un système de communication radio spécifique qui lui est alloué par lecture à partir dudit dispositif de stockage et d'exécution d'un traitement de signal correspondant au module de système bloqué ; et
une étape de réalisation d'une commande de gestion de manière à allouer un module de système, qui correspond à un système de communication radio à utiliser et qui est l'un des modules de système qui sont stockés dans ledit dispositif de stockage, à ladite ressource de traitement de signal et de réalisation d'une commande de gestion dans une zone de service en chevauchement entre une pluralité de types de systèmes de communication radio de manière à allouer des modules de système qui correspondent à ladite pluralité de types de systèmes de communications radio à ladite ressource de traitement de signal sur la base de l'information d'identification qui est incluse dans le signal de pilote et qui est rapportée aux systèmes de communication radio.

5. Procédé de commande de transfert selon la revendication 4, **caractérisé en ce qu'**une requête pour déconnecter une communication avec un système de communication radio qui a été engagé dans la communication avant transfert est réalisée lorsqu'une condition de transfert est satisfaite.

6. Procédé de commande de transfert selon la revendication 4, **caractérisé en ce que**, lorsqu'un transfert est démarré, une vitesse de transmission qui est utilisée pour la communication est réduite dans le cas où il y a un manque de ressource au niveau de la station de base pertinente et à la fin du transfert, la vitesse de transmission est ramenée à la vitesse originale.
